# EUROPEAN PATENT APPLICATION

(11) **EP 2 960 980 A1**
(43) Date of publication of application: **30.12.2015**
(21) Application number: 14753984.5
(22) Date of filing: 21.02.2014
(51) Int. Cl.: H01M 14/00, H01L 31/04

(54) **PHOTOELECTRIC CONVERSION ELEMENT, METHOD FOR MANUFACTURING PHOTOELECTRIC CONVERSION ELEMENT AND DYE-SENSITIZED SOLAR CELL**

(30) Priority: 22.02.2013 JP 2013032945
(71) Applicant: FUJIFILM Corporation, Tokyo 106-8620 (JP)
(72) Inventor: KOBAYASHI Katsumi, Ashigarakami-gun Kanagawa 258-8577 (JP); KAITO Ryozo, Ashigarakami-gun Kanagawa 258-8577 (JP); YUUYA Shigenori, Ashigarakami-gun Kanagawa 258-8577 (JP)
(74) Representative: Hoffmann Eitle
(86) International application number: PCT/JP2014/054128
(87) International publication number: WO 2014/129575

(57) **Abstract**

A photoelectric conversion element has a substrate including at least an aluminium layer and an insulating layer having a porous structure formed by anodizing at least one surface of the aluminium layer and a laminated structure disposed on the insulating layer, in which the laminated structure contains a first electrode, a photosensitive body having a porous semiconductor fine particle layer onto which a dye has been adsorbed, a charge transfer body, and a counter electrode. The insulating layer has strain in a compression direction at 23°C. A dye-sensitized solar cell includes the photoelectric conversion element.

## Description

### BACKGROUND OF THE INVENTION

### 1. Field of the Invention

The present invention relates to a photoelectric conversion element which has high output voltage and high photoelectric conversion efficiency, a method for manufacturing a photoelectric conversion element, and a dye-sensitized solar cell.

### 2. Description of the Related Art

Photoelectric conversion elements are used in various photosensors, copy machines, solar cells, and the like. The photoelectric conversion elements have been put to practical use in the form of photoelectric conversion elements adopting various modes, such as photoelectric conversion elements using metals, photoelectric conversion elements using semiconductors, photoelectric conversion elements using organic pigments or dyes, or photoelectric conversion elements as a combination of these. Particularly, because solar cells using inexhaustible solar energy do not require fuels and use inexhaustible clean energy, full-scale commercialization of solar cells is highly anticipated. Therefore, silicon-based solar cells have been researched and developed for a long period of time, and are becoming increasingly popular by the political support of each country. However, the silicon-based solar cells require a relatively high cost for silicon purification processing. Furthermore, because the silicon-based solar cells use heavy glass as a substrate, workability at the time of installing the solar cells is poor, and the installation cost thereof is also high. These problems hinder further reduction in power generation costs.

As a solar cell that can solve the above problems, a dye-sensitized solar cell is considered as one of the promising solar cells. The dye-sensitized solar cell can be manufactured by inexpensive processing using printing and uses a light and flexible resinic substrate as a substrate. It is expected that if the dye-sensitized solar cell can be manufactured by roll-to-roll processing (roll-to-roll method), the manufacturing cost and the installation cost thereof can be greatly reduced. Consequently, in order to put the dye-sensitized solar cell using the light and flexible resinic substrate to practical use, examination is being conducted. However, in the manufacturing process of the dye-sensitized solar cell, after paste of titanium oxide nanoparticles is printed, firing processing performed at a high temperature equal to or higher than 450°C needs to be conducted. Although the high temperature processing can be performed on a dye-sensitized solar cell using a glass substrate, a resin substrate cannot be heated at a temperature equal to or higher than 150°C because the substrate undergoes deformation or the like, and the photoelectric conversion efficiency of the dye-sensitized solar cell using a resin substrate is lower than that of the dye-sensitized solar cell using a glass substrate (see JP2002-280587A, JP2002-184475A, and JP2003-98977A).

3rd Research report (December 2000), p. 21, Tokyo Metropolitan Industrial Technology Research Institute, Masashi Kayashima, Masakazu Tadami is an example of the related art.

### SUMMARY OF THE INVENTION

As described above, the photoelectric conversion efficiency of the dye-sensitized solar cell using a resin substrate is lower than that of the dye-sensitized solar cell using a glass substrate. Furthermore, when a resin substrate is used, gas barrier properties of the resin substrate that are poorer than the gas barrier properties of glass, and thus deterioration of durability becomes a problem. Moreover, when a resin substrate is used, because the substrate easily expands and contracts, a problem arises in which the performance such as photoelectric conversion efficiency or durability easily shows variation in the manufacturing process.

Therefore, there is a demand for the development of a dye-sensitized solar cell which is light and flexible, exhibits less reduction in photoelectric conversion efficiency compared to a solar cell using a glass substrate, can be printed with high accuracy, and shows small variations in photoelectric conversion efficiency and durability.

The present invention has been made in consideration of the aforementioned circumstances, and an object thereof is to provide a photoelectric conversion element, which is light and flexible, exhibits less reduction in photoelectric conversion efficiency compared to a solar cell having a glass substrate, and shows small variations in photoelectric conversion efficiency and durability, a method for manufacturing a photoelectric conversion element, and a dye-sensitized solar cell.

As a result of repeatedly conducting intensive examination, the present inventors found that if a metal substrate with an insulating layer having a specific anodic oxide film is constituted with layers in a specific way, a photoelectric conversion element having high photoelectric conversion efficiency can be provided. Based on this finding, the present inventors accomplished the present invention.

That is, the object of the present invention was achieved by the following means.
(1) A photoelectric conversion element comprises a substrate including at least an aluminium layer and an insulating layer having a porous structure formed by anodizing at least one surface of the aluminium layer and a laminated structure disposed on the insulating layer, in which the laminated structure contains a first electrode, a photosensitive body having a porous semiconductor fine particle layer onto which a dye has been adsorbed, a charge transfer body, and a counter electrode that are disposed on the insulating layer, in which the insulating layer has strain in a compression direction at 23°C.
(2) The photoelectric conversion element described in (1) that is a photoelectric conversion element obtained by laminating the first electrode, the photosensitive body having a porous semiconductor fine particle layer onto which a dye has been adsorbed, the charge transfer body, and the counter electrode on the insulating layer in this order from the side of the insulating layer.
(3) The photoelectric conversion element described in (1) or (2), in which the porous semiconductor fine particle is titanium oxide, tin oxide, or zinc oxide..
(4) The photoelectric conversion element described in any one of (1) to (3), in which the porous semiconductor fine particle is titanium oxide.
(5) The photoelectric conversion element described in any one of (1) to (4), in which the dye is a metal complex dye.
(6) The photoelectric conversion element described in (5), in which the metal complex dye is a metal complex dye containing a Ru atom or an Os atom.
(7) The photoelectric conversion element described in any one of (1) to (6), in which the strain in the compression direction of the insulating layer is 0.005% to 0.25%.
(8) The photoelectric conversion element described in any one of (1) to (7), in which at least one surface of the substrate including a metal, which has a linear thermal expansion coefficient smaller than that of aluminium and has rigidity and heat resistance higher than those of aluminium, is integrated with an aluminium material by pressure bonding, and the insulating layer is formed on at least one surface of the aluminium material.
(9) The photoelectric conversion element described in (8), in which the metal constituting the substrate includes ferrite-based stainless steel.
(10) A method for manufacturing a photoelectric conversion element includes forming an insulating layer having strain in a compression direction at 23°C by anodizing at least one surface of an aluminium material, and forming a laminated structure including a first electrode, a photosensitive body having a porous semiconductor fine particle layer onto which a dye has been adsorbed, a charge transfer body, and a counter electrode on the insulating layer.
(11) A dye-sensitized solar cell includes the photoelectric conversion element described in any one of (1) to (9).

According to the present invention, it is possible to provide a photoelectric conversion element, which is light and flexible, exhibits less reduction in photoelectric conversion efficiency compared to a solar cell having a glass substrate, and shows small variations in photoelectric conversion efficiency and durability, a method for manufacturing a photoelectric conversion element, and a dye-sensitized solar cell.

### BRIEF DESCRIPTION OF THE DRAWINGS

Fig. 1 is a cross-sectional view schematically showing an embodiment of a photoelectric conversion element of the present invention.
Fig. 2A, 2B, and 2C are schematic cross-sectional view showing examples of three forms of a substrate according to an embodiment of the present invention.
Fig. 3 is a graph schematically showing the amount of strain applied to an anodic oxide film of the related art and the amount of strain applied to anodic oxide films having a compressive strain of 0.09% and 0.16%.
Fig. 4 is a graph schematically showing the amount of strain applied to an anodic oxide film of the related art and the amount of strain applied to anodic oxide films when a linear thermal expansion coefficient of a composite substrate thereof is 17 ppm/K and 10 ppm/K.
Fig. 5 is a graph schematically showing heating processing conditions, in which the ordinate shows annealing temperature, and the abscissa shows annealing time.

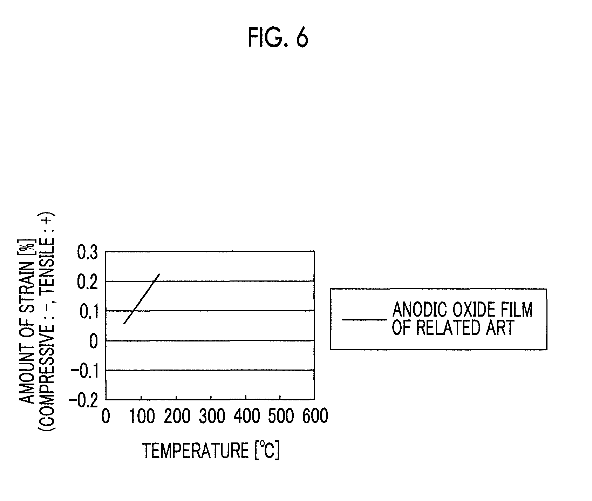

Fig. 6 is a graph schematically showing the amount of strain applied to an anodic oxide film of the related art.
Fig. 7 is a schematic perspective view showing the structure of an anodic oxide film.

### DESCRIPTION OF THE PREFERRED EMBODIMENTS

The photoelectric conversion element of the present invention has a substrate which includes at least an aluminium layer and an insulating layer with a porous structure that is formed by anodizing at least one surface of the aluminium layer, and a laminated structure disposed on the insulating layer, in which the laminated structure contains a first electrode, a photosensitive body having a porous semiconductor fine particle layer onto which a dye has been adsorbed, a charge transfer body, and a counter electrode, in which the first electrode, the photosensitive body, the charge transfer body, and the counter electrode, and the insulating layer has strain in a compression direction at 23°C.

### <Photoelectric conversion element>

A preferable embodiment of the photoelectric conversion element of the present invention will be described with reference to drawings.

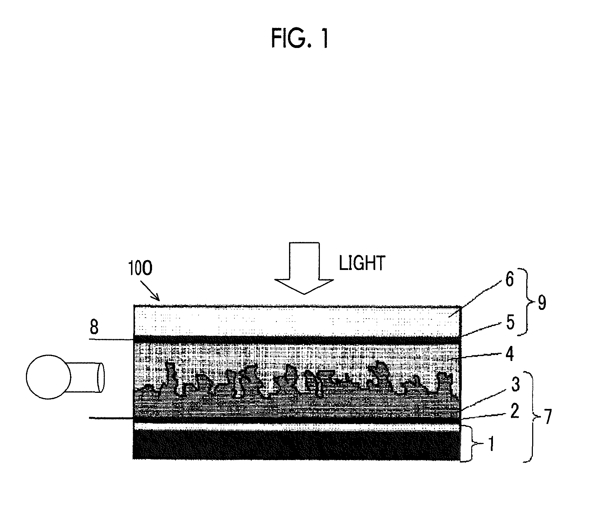

As shown in Fig. 1, a photoelectric conversion element 100 is composed of a substrate 1, a first electrode 2, a photosensitive body 3 having a porous semiconductor fine particle layer onto which a dye has been adsorbed, a charge transfer body 4, and a counter electrode 9. The counter electrode 9 is composed of a second electrode 5 and a transparent substrate 6. In the photoelectric conversion element 100, the first electrode 2 on which the photosensitive body 3 is formed functions as a working electrode. Fig. 1 shows a system using a dye-sensitized solar cell that is established by using the photoelectric conversion element 100 as a battery working through an external circuit 8. In this system, a light receiving electrode 7 is an electrode composed of the substrate 1, the first electrode 2, and the photosensitive body 3 having a porous semiconductor particle onto which a dye has been adsorbed.

The materials used in the photoelectric conversion element of the present invention will be specifically described.

### <Substrate>

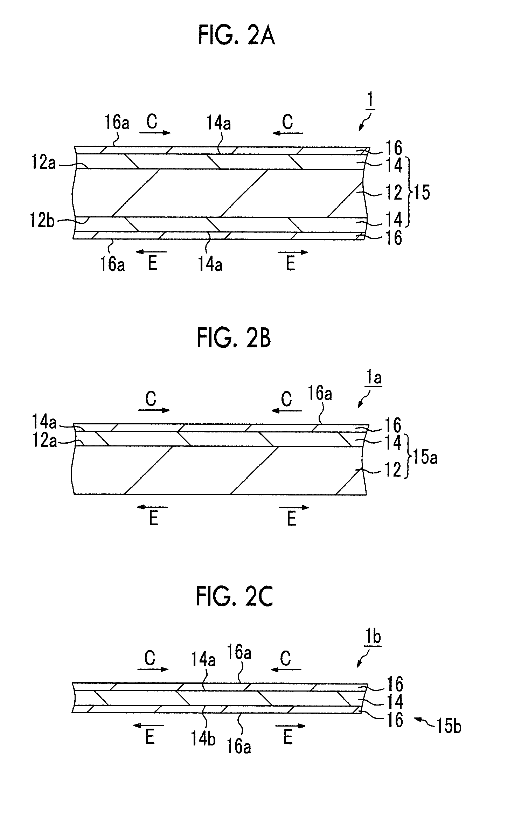

As shown in Fig. 2A or Fig. 2B, the substrate 1 in the photoelectric conversion element 100 of the present invention may be constituted with a base material 12, an aluminium layer (hereinafter, referred to as an Al layer) 14, and an insulating layer 16. Alternatively, as shown in Fig. 2C, the substrate 1 may be constituted with the Al layer 14 and the insulating layer 16.

When the substrate has the base material 12, it is preferable that the base material 12 and the Al layer 14 are integrally formed. More preferably, in the substrate, at least one surface of the base material is integrated with an aluminium material.

The insulating layer 16 is an anodic oxide film of aluminium (hereinafter, also referred to as Al) having a porous structure that is formed by anodizing a surface of the Al layer 14. Herein, a laminate in which the base material 12 and the Al layer 14 are laminated on each other and integrated is referred to as a metal base material 15.

In the substrate 1, aluminium or a metal different from aluminium is used as the base material 12. When a metal different from aluminium is used, the structure shown in Fig. 2A is established.

Examples of the metal different from aluminium include a metal or an alloy having a Young's modulus greater than that of aluminium and an aluminium alloy. As such a metal, a metal is preferable which has a linear thermal expansion coefficient smaller than that of aluminium and has rigidity and heat resistance higher than that of aluminium. The base material 12 more preferably has a linear thermal expansion coefficient that is greater than that of the anodic oxide film constituting the insulating layer 16 and smaller than that of aluminium. The base material 12 even more preferably has a Young's modulus that is greater than that of the anodic oxide film constituting the insulating layer 16 and smaller than that of aluminium.

Considering the aforementioned aspects, in Fig. 2A, for example, steel materials such as carbon steel and ferrite-based stainless steel are used as the base material 12. Furthermore, at a temperature of equal to or higher than 300°C, the steel materials such as carbon steel and ferrite-based stainless steel used as the base material 12 exhibit a higher degree of heat resistance strength compared to an aluminium alloy, and accordingly, the substrate 1 having excellent heat resistance is obtained.

As the carbon steel used as the base material 12, for example, carbon steel for machine structural use with a carbon content of equal to or less than 0.6% by mass is used. As the carbon steel for machine structural use, for example, carbon steel for machine structural use that is generally called an SC material is used.

As the ferrite-based stainless steel, SUS430, SUS405, SUS410, SUS436, SUS444, and the like can be used.

In addition to these steel materials, a steel material that is generally called SPCC (cold rolled steel sheet) is used.

The base material 12 may also be constituted with a cobalt alloy (5 ppm/K), titanium, or a titanium alloy in addition to the above materials. As the titanium, pure Ti (9.2 ppm/K) is used, and as the titanium alloy, a wrought alloy such as Ti-6Al-4V or Ti-15V-3Cr-3Al-3Sn is used. These metals are also used in the form of a flat plate or foil.

The thickness of the base material 12 exerts an influence on flexibility. Therefore, as long as rigidity thereof does not become excessively insufficient, it is preferable to thin down the base material 12.

For example, in Fig. 2A, the thickness of the base material 12 is 10 µm to 800 µm, preferably 30 µm to 300 µm, and more preferably 50 µm to 150 µm. In view of the cost of raw materials, it is preferable to thin down the base material 12.

In order to make a flexible base material 12, it is preferable to use ferrite-based stainless steel as the base material 12.

The Al layer 14 is a layer containing aluminium as a main component. Containing aluminium as a main component means that the aluminium content is equal to or greater than 90% by mass.

As the Al layer 14, for example, aluminium, or an aluminium alloy is used.

As the Al layer 14, for example, it is possible to use known aluminium materials described in "Aluminium Handbook, 4th Edition" (Light Metal Association, 1990). Specifically, it is possible to use 1000 series alloys such as a JIS 1050 alloy and a JIS 1100 alloy, 3000 series alloys such as a JIS 3003 alloy, a JIS 3004 alloy, and a JIS 3005 alloy, 6000 series alloys such as a JIS 6061 alloy, a JIS 6063 alloy, and a JIS 6101 alloy, an international registration alloy 3103 A, and the like.

The aluminium or aluminium alloy used as the Al layer 14 preferably does not contain an unnecessary intermetallic compound. Specifically, it is preferable to use aluminium having a purity of equal to or higher than 99% by mass that contains a small amount of impurities. For example, the purity of the aluminium may be 99.99% by mass, 99.96% by mass, 99.9% by mass, 99.85% by mass, 99.7% by mass, 99.5% by mass, or the like. If the purity of aluminium of the Al layer 14 is increased as above, it is possible to prevent the formation of an intermetallic compound resulting from precipitates and to improve the integrity of the insulating layer 16. This is because when an aluminium alloy is anodized, insulation failure is likely to occur from an intermetallic compound as a starting point, and accordingly, if the Al layer contains a large amount of the intermetallic compound, insulation failure is highly likely to occur.

Particularly, from the viewpoint of inhibiting the disturbance of a regularized state (a state in which micropores are regularly formed in the anodic oxide film) of the anodic oxide film, which will be described later, it is preferable to use aluminium having a purity of equal to or higher than 99.99% by mass as the Al layer 14. When the regularized state of the anodic oxide film is disturbed, and thermal strain occurs, the thermal strain becomes a starting point of cracking. Accordingly, the higher the purity of the Al layer 14, the better the heat resistance thereof.

As described above, as the Al layer 14, it is also possible to use industrial aluminium that is advantageous in terms of cost. However, from the viewpoint of insulation properties of the insulating layer 16, it is preferable to use aluminium that does not cause precipitation of Si in the Al layer 14.

In the substrate 1, the insulating layer 16 exhibits electrical insulation properties and functions to prevent the photoelectric conversion element from being damaged due to mechanical impact at the time of handling. The insulating layer 16 is constituted with an anodic oxide film (alumina film, Al₂O₃ film) formed by anodizing aluminium.

The anodic oxide film forming the insulating layer 16 has strain in a compression direction C (hereinafter, the strain will be also referred to as compressive strain) at room temperature (23°C). The magnitude of the strain of the insulating layer in the compression direction is preferably 0.005% to 0.25%. Generally, in an anodic oxide film of aluminium, strain in a tensile direction occurs (hereinafter, the strain will be also referred to as tensile strain).

If the compressive strain is less than 0.005%, although the insulating layer has strain, most of the compressive force substantially acts on the anodic oxide film that will become the insulating layer 16, and therefore the effect of crack resistance is not easily obtained. Meanwhile, considering the case in which the anodic oxide film that will become the insulating layer 16 is peeled off, the case in which strong compressive strain is applied to the anodic oxide film and thus cracks occur in the anodic oxide film, and the case in which the anodic oxide film swells up and thus the flatness thereof deteriorates or the anodic oxide film is peeled off, the upper limit of the compressive strain is 0.25%, more preferably equal to or less than 0.20%, and particularly preferably equal to or less than 0.15%.

In the related art, in a metal base material with an insulating layer in which an anodic oxide film is formed as an insulating layer on the metal base material 15, heat resistance at the time of manufacturing a photoelectric conversion element, manufacture suitability to the roll-to-roll processing, bending resistance of the metal base material as a flexible substrate, and durability and strength thereof over a long period of time become a problem.

When being exposed to a high temperature, the metal base material 15 is stretched. At this time, the anodic oxide film cannot withstand the stretching and is ruptured, and as a result, the problem of heat resistance arises. This is because a difference in a linear thermal expansion coefficient between the metal base material 15 and the anodic oxide film is great.

For example, a linear thermal expansion coefficient of aluminium is 23 ppm/K, and a linear thermal expansion coefficient of the anodic oxide film is 4 ppm/K to 5 ppm/K Therefore, during the high temperature processing in which the base material and the anodic oxide film are stretched in different amounts due to the difference of the linear thermal expansion coefficient, the anodic oxide film cannot withstand stretching of the base material, and tensile stress causing rupture of the anodic oxide film is applied thereto.

When the anodic oxide film is bent toward the outside, tensile stress is applied to the anodic oxide film. The anodic oxide film cannot withstand the tensile stress and is ruptured, and as a result, the problem of bending resistance arises.

The anodic oxide film cannot withstand a change in stress resulting from disturbances described below and is ruptured, and as a result, the problem of durability and strength arises. Specifically, the disturbances include the thermal expansion or thermal contraction of the substrate caused by the temperature increase or temperature reduction over a long period of time at the time of manufacturing, and the alteration or volume change of the anodic oxide film, a semiconductor layer, a sealing layer, and the like caused by external stress, humidity, temperature, oxidation, and the like.

As a result of conducting intensive experiment and research, the present inventors found that if strain in a compression direction is applied beforehand to the anodic oxide film at room temperature, it is possible to realize an anodic oxide film which heat resistance at the time of manufacturing a semiconductor element, manufacture suitability to the roll-to-roll processing, bending resistance as a flexible substrate, and durability and strength over a long period of time.

The reason why the crack resistance is improved by the application of strain in a compression direction to the anodic oxide film at room temperature can be explained as below. In the following section, the mechanism of improving the resistance against heat and crack will be schematically described as an example. However, presumably, because the mechanism inhibits the anodic oxide film from being ruptured by the tensile stress, the same mechanism may act to improve overall crack resistance against external stress such as bending and a temperature change.

In an anodic oxide film obtained by the technique of the related art, tensile strain causing internal strain of about 0.005% to 0.06% occurs at room temperature. Furthermore, the linear thermal expansion coefficient of the anodic oxide film is about 5 ppm/K, and the linear thermal expansion coefficient of aluminium is 23 ppm/K Consequently, due to the temperature increase, tensile strain is applied to the anodic oxide film on the aluminium layer at a ratio of 18 ppm/K. If tensile strain of 0.16% to 0.23%, which is the rupture limit of the anodic oxide film, is applied thereto, cracks occur in the anodic oxide film. In the anodic oxide film obtained by the technique of the related art, cracks occur at a temperature of 120°C to 150°C.

In contrast, in the anodic oxide film of the present invention, internal strain occurs in the form of compressive strain at room temperature. Herein, the present inventors confirmed that the linear thermal expansion coefficient of the anodic oxide film is about 5 ppm/K regardless of the type of the film. The anodic oxide film of the present invention also has a linear thermal expansion coefficient of about 5 ppm/K. Consequently, due to the temperature increase, tensile strain is applied to the anodic oxide film at a ratio of 18 ppm/K. Presumably, the rupture limit of the anodic oxide film is about 0.16% to 0.23% regardless of the type of the film, and if tensile strain of such a magnitude is applied thereto, cracks occur.

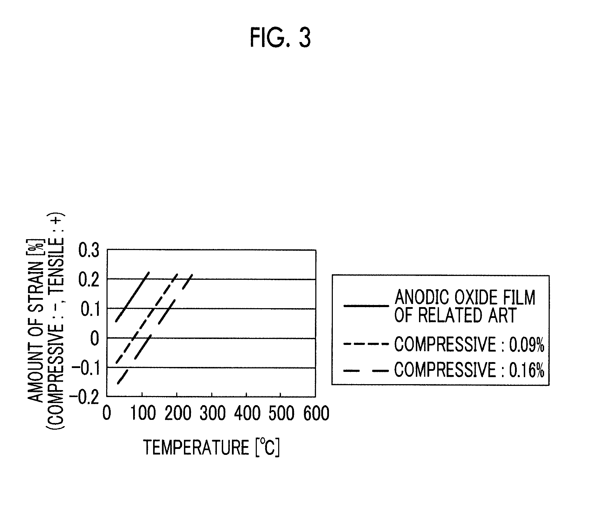

In the case of the anodic oxide film having a compressive strain of 0.005% to 0.25%, which is a preferable range, at room temperature, provided that tensile strain is applied thereto at a ratio of 18 ppm/K, tensile strain of 0.16% to 0.23% is applied thereto at 170°C to 340°C. Fig. 3 schematically shows the amount of tensile strain applied to an anodic oxide film of the related art and the amount of tensile strain applied to anodic oxide films having a compressive strain of 0.09% and 0.16%. As shown in Fig. 3, if the amount of compressive strain is increased, the temperature at which cracks occur can be further increased. In reality, the linear thermal expansion coefficient of the anodic oxide film is not always constant, the anodic oxide film contracts due to the dehydration of moisture contained in the anodic oxide film, and the substrate loses its rigidity due to softening of aluminium. For these reasons, the results of model calculation do not completely agree with the results obtained from real situations. However, through experiments, it was confirmed that the temperature at which cracks occur can be increased in the aforementioned manner.

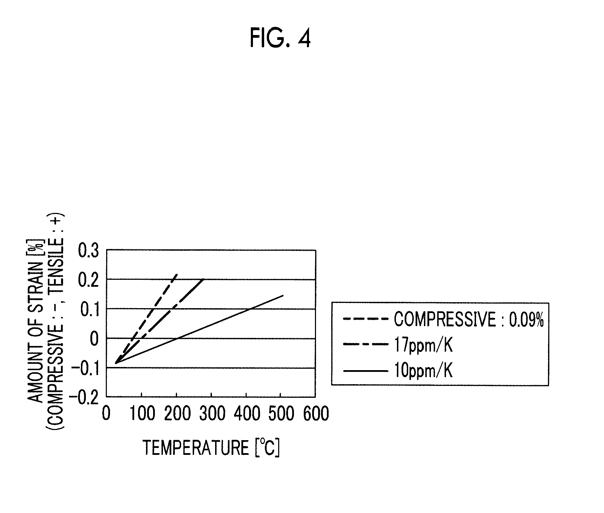

If a composite substrate of aluminium and dissimilar metals is used as the substrate 1, it is possible to increase the temperature at which cracks occur. The linear thermal expansion coefficient of the composite substrate can be calculated as an average by using the linear thermal expansion coefficient, Young's modulus, and thickness of the constituent metal materials. In a case of using a composite substrate of a metal material and aluminium is used in which the linear thermal expansion coefficient of aluminium is smaller than 23 ppm/K and the linear thermal expansion coefficient of the anodic oxide film is equal to or greater than 5 ppm/K, the linear thermal expansion coefficient of the composite substrate can be made smaller than 23 ppm/K, although the linear thermal expansion coefficient also depends on the Young's modulus and thickness of the substrate. Fig. 4 schematically shows the amount of tensile strain applied to anodic oxide films in a case in which the linear thermal expansion coefficients of the composite substrates are 17 ppm/K and 10 ppm/K. Even if the anodic oxide films have the same compressive strain at room temperature, if the linear thermal expansion coefficient of the substrate 1 is reduced, the temperature at which cracks occur can be further increased. In reality, the linear thermal expansion coefficient of the anodic oxide film is not always constant, and the anodic oxide film contracts due to the dehydration of moisture contained in the anodic oxide film. For these reasons, the results of model calculation do not completely agree with the results obtained from real situations. However, through experiments, it was confirmed that the temperature at which cracks occur can be further increased in the aforementioned manner.

Specifically, the anodic oxide film having strain in a compression direction at room temperature can be obtained by the method described below. However, needless to say, the method is not limited to the following.

One of the methods for applying strain in a compression direction to the anodic oxide film is a method of anodizing the Al layer 14 of the metal base material in a state in which the metal base material 15 has been stretched further than when it is used at room temperature. For example, as long as the tensile force within a range causing elastic deformation can be applied to the metal base material in a tensile direction, or the metal base material can be in a state of having a curvature, the method is not particularly limited. Specifically, in a case of using the roll-to-roll method, for example, it is possible to use a method of applying tensile force to the metal base material 15 by adjusting the tension at the time of transport or a method of giving a curvature to the metal base material 15 by making a transport path in an anodizing tank have a curved surface shape. If anodization processing is performed in this state, it is possible to obtain an anodic oxide film in which the magnitude of the compressive strain is 0.005% to 0.25% at room temperature (23°C). In this method, the entirety of the anodic oxide film has strain in a compression direction. That is, although the anodic oxide film is constituted with a barrier layer and a porous layer, both the barrier layer and the porous layer have compressive strain.

The following method can also be used. In this method, by using an aqueous solution with a temperature of 50°C to 98°C, the metal base material 15 is anodized in a state of being stretched further than when it is used at room temperature. Accordingly, when the temperature is returned to room temperature, the metal base material is in a state in which compressive strain has occurred in the anodic oxide film. In this method, the upper limit of the temperature of the aqueous solution used for anodization is about 100°C, and therefore the stretch amount of the metal base material 15 is limited to 0.1%. Consequently, the amount of compressive strain of the anodic oxide film also becomes 0.1%. For this reason, when compressive strain is applied to the anodic oxide film by using an aqueous solution with a temperature of 50°C to 98°C, the upper limit of the compressive strain is about 0.1%. The entirety of the anodic oxide film also has the compressive strain in this method. That is, both the barrier layer and the porous layer have compressive strain.

The following method can also be used. In this method, the aluminium material forming the anodic oxide film is subjected to annealing processing by being heated to about a temperature at which the anodic oxide film is not cracked. When the temperature is returned to room temperature, the aluminium material is in a state in which compressive strain has occurred in the anodic oxide film. This is because when the anodic oxide film is stretched at a high temperature, it undergoes structural change, and the tensile strain is reduced, and when the temperature of the anodic oxide film is decreased, the aluminium material contracts, and thus the compressive strain occurs in the anodic oxide film. In this way, after the anodic oxide film is prepared, the entirety of the anodic oxide film in which the tensile strain has occurred can be shifted to the state of compressive strain. That is, both the barrier layer and the porous layer can be shifted to the state of compressive strain. Hereinafter, the effect of shifting the tensile strain to the compressive strain in this way will be referred to as a compressing effect.

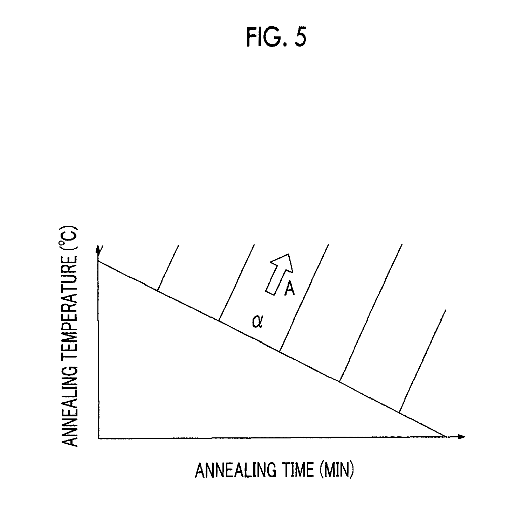

As schematically shown in Fig. 5, the compressing effect is easily exerted in a region α. In the region α, the compressing effect is increased in the direction of the arrow A. That is, in the annealing processing, the higher the temperature of the processing, and the longer the time taken for the processing, the further the compressing effect is increased.

The compressing effect of the anodic oxide film that is obtained by the annealing processing does not depend on the anodization conditions. That is, as an electrolytic solution for the anodization, it is possible to use an aqueous electrolytic solution such as an inorganic acid, an organic acid, an alkali, a buffer solution, or a mixture of these and a non-aqueous electrolytic solution such as an organic solvent or a molten salt. The structure of the anodic oxide film can be controlled by the concentration, voltage, temperature, and the like of the electrolytic solution. However, in any of anodic oxide films, the tensile strain having occurred in the anodic oxide film can be shifted to the compressive strain by the annealing processing.

Furthermore, it was confirmed that in both the case in which the annealing processing is performed in a vacuum and the case in which the annealing processing is performed in the air, the compressing effect of shifting the strain of the anodic oxide film to the compressive strain can be obtained in the same manner.

The strain and stress are represented by a coefficient which is a Young's modulus of a material, and are linearly related to each other within a range of elasticity. Therefore, in the present invention, the anodic oxide film to which the compressive strain has been applied has the same definition as the anodic oxide film to which stress in a compression direction (hereinafter, the stress will also be referred to as "compressive stress") has been applied. The present inventors found that the anodic oxide film has a Young's modulus of 50 GPa to 150 GPa. Based on the aforementioned Young's modulus and the aforementioned preferable range of the compressive strain, the compressive stress is preferably within the following range.

In the substrate 1, the stress in a compression direction acts on the insulating layer 16 at room temperature, and the magnitude of the compressive stress is 2.5 MPa to 300 MPa. The magnitude of the compressive stress is preferably 5 MPa to 300 MPa, more preferably 5 MPa to 150 MPa, and particularly preferably 5 MPa to 75 MPa.

If the compressive stress is less than 2.5 MPa, the compressive stress substantially does not act on the anodic oxide film that will become the insulating layer 16, and the effect of crack resistance is not easily obtained. In contrast, considering the case in which the anodic oxide film that will become the insulating layer 16 is peeled off or the case in which cracks occur in the anodic oxide film, the upper limit of the compressive stress is 300 MPa.

As described above, when the aqueous solution with a temperature of 50°C to 98°C is used to apply the compressive strain to the anodic oxide film in a state in which the metal base material 15 has been stretched further than when it is used at room temperature, it is difficult to apply great compressive strain. Therefore, the upper limit of the compressive strain is about 150 MPa.

In the substrate 1, the thickness of the insulating layer 16 is preferably equal to or greater than 3 µm and equal to or less than 20 µm, more preferably equal to or greater than 5 µm and equal to or less than 20 µm, and particularly preferably equal to or greater than 5 µm and equal to or less than 15 µm. If the insulating layer 16 is too thick, it is not preferable because flexibility deteriorates, and formation of the insulating layer 16 is expensive and becomes time consuming. If the insulating layer 16 is too thin, the insulating layer 16 may not exhibit electrical insulation properties and may not be able to prevent the photoelectric conversion element from being damaged due to mechanical impact at the time of handling.

The surface roughness of a surface 18a of the insulating layer 16 is, for example, equal to or less than 1 µm in terms of arithmetic mean roughness Ra. The surface roughness is preferably equal to or less than 0.5 µm, and more preferably equal to or less than 0.1 µm.

If all of the base material 12, the Al layer 14, and the insulating layer 16 of the substrate 1 are formed of a material having flexibility which is a flexible material in other words, the entirety of the substrate 1 becomes a flexible substrate. As a result, for example, by using the roll-to-roll method, a photoelectric conversion element can be formed on the insulating layer 16 of the substrate 1.

In the present invention, a substrate is used which is composed of at least an aluminium layer and an insulating layer with a porous structure that is formed by anodizing at least one surface of the aluminium layer. The substrate 1 can also be embodied as shown in Fig 2A in which the Al layer 14 and the insulating layer 16 are disposed on both surfaces of the base material 12. In this way, if the metal base material 15, which has a double layer cladding structure composed of the base material 12 of stainless steel and the Al layer 14, is used in a substrate 1a, it is possible to prepare a thinner substrate at lower cost.

In the present embodiment, the metal base material 15 which has a double layer structure composed of the base material 12 and the Al layer 14 is used. However, in the present invention, the substrate only needs to have at least the Al layer 14, and accordingly, the base material 12 may also be composed of the Al layer 14. Therefore, as in a substrate 1b shown in Fig. 2C, a metal base material 15b may be solely composed of the Al layer 14. Moreover, the base material 12 of each of the metal base materials 15 and 15a may be constituted with a plurality of layers.

Next, the method for measuring strain of the anodic oxide film that will become the insulating layer 16 will be described.

In the following description, in a strict sense, the strain of the anodic oxide film is a combination of both the strain of the porous layer and the strain of the barrier layer, and through a formula of material mechanics, the strain is indicated as a weighted average to which the Young's modulus and the film thickness have been added. However, in reality, the following strain amount may be regarded as being a strain amount of the porous layer. Herein, the porous layer and the barrier layer are formed of compounds that are the same as each other except for the structure thereof. Therefore, presumably, they may have the same Young's modulus. Consequently, the weighted average obtained by adding the film thickness to the strain of both the porous layer and the barrier layer is regarded as being the strain of the anodic oxide film. The film thickness of the barrier layer is known to be equal to a value obtained by multiplying anodization voltage by a coefficient of about 1.4 nm/V, and is about hundreds of nm at most. Accordingly, generally, the thickness of the porous layer is at least several times or tens of times greater than the thickness of the barrier layer. In the present invention, the thickness of the porous layer having a thickness of equal to or greater than 3 µm is preferably at least 10 times greater than the thickness of the barrier layer. Therefore, the strain of the barrier layer practically does not exert an influence on the strain of the entirety of the anodic oxide film. Consequently, the strain of the anodic oxide film measured by the following method is regarded as being the strain of the porous layer.

In the present invention, first, the length of the anodic oxide film in the substrate 1 is measured.

Thereafter, the metal base material 15 is dissolved and removed, and the anodic oxide film is taken out of the substrate 1. Subsequently, the length of the anodic oxide film is measured.

From the length before and after the removal of the metal base material 15, the strain is calculated.

If the length of the anodic oxide film is increased after the removal of the metal base material 15, it shows that the compressive stress has been applied to the anodic oxide film. That is, in the anodic oxide film, the strain in a compression direction has occurred. In contrast, if the length of the anodic oxide film is decreased after the removal of the metal base material 15, it shows that the tensile stress has been applied to the anodic oxide film. That is, in the anodic oxide film, the strain in a tensile direction has occurred.

The length of the anodic oxide film before and after the removal of the metal base material 15 may be the total length of the anodic oxide film or the length of a portion of the anodic oxide film.

For dissolving the metal base material 15, for example, an aqueous hydrochloric acid solution containing copper chloride, an aqueous hydrochloric acid solution containing mercury chloride, an aqueous hydrochloric acid solution containing tin chloride, an iodine methanol solution, or the like is used. The solution for dissolving the metal base material 15 is appropriately selected according to the composition of the metal base material 15.

In the present invention, the metal base material 15 is removed, and in addition, for example, a warpage amount and a deflection amount of the base material 12 having a high degree of planarity are measured. Then, the anodic oxide film is formed on one surface of the base material 12, and a warpage amount and a deflection amount of the base material 12 on which the anodic oxide film has been formed are measured. By using the warpage amount and the deflection amount before and after the formation of the anodic oxide film, the amount of strain is calculated.

For example, the warpage amount and the deflection amount of the base material 12 are measured by a method of accurately measuring them in an optical manner by using laser. Specifically, various measurement methods described in "Surface Technology" (58, 213, 2007) and "R & D Review" (Toyota Central R&D Labs., Inc., 34, 19, 1999) can be used for measuring the warpage amount and the deflection amount of the base material 12.

In addition, the strain of the anodic oxide film that will become the insulating layer 16 may be measured as below. In this case, first, the length of the thin aluminium film is measured. Thereafter, an anodic oxide film is formed on the thin aluminium film, and the length of the thin aluminium film on which the anodic oxide film has been formed is measured. From the length of the thin aluminium film before and after the formation of the anodic oxide film, the amount of contraction is calculated and converted into the amount of strain.

Except for the method of removing the metal base material 15, the aforementioned methods are methods of measuring the amount of strain of the anodic oxide film in which the metal base material 15 remains. Therefore, it is difficult to say that the influence of the metal base material 15 can be completely ruled out. In contrast, if the method of removing the metal base material 15 is used, it is possible to directly measure the amount of strain of the anodic oxide film without being influenced by the metal base material 15. Accordingly, in the present invention, for measuring the amount of strain, it is preferable to use the method of removing the metal base material 15 that makes it possible to accurately measure the amount of strain of the anodic oxide film.

The internal stress of the anodic oxide film can be calculated by a formula of material mechanics by using the Young's modulus of the anodic oxide film and the amount of strain existing in the anodic oxide film. Herein, the amount of strain may be determined as above.

The Young's modulus of the anodic oxide film can be determined by performing an indentation test on the anodic oxide film, which remains in the substrate 1, by using an indentation tester, a nanoindenter, or the like.

In order to measure the Young's modulus of the anodic oxide film, first, the anodic oxide film is taken out of the substrate 1 by removing the metal base material 15 from the substrate 1. Thereafter, an indentation test is performed on the anodic oxide film, which has been taken out of the substrate 1, by using an indentation tester, a nanoindenter, or the like, and in this way, the Young's modulus of the anodic oxide film can be determined.

Furthermore, the Young's modulus of the anodic oxide film may be measured by taking only the anodic oxide film out of a sample, which is obtained by forming the anodic oxide film on a thin film of a metal such as aluminium, or out of the substrate 1 and then performing a tensile test on the anodic oxide film taken out of the sample or the substrate 1. Alternatively, the Young's modulus of the anodic oxide film may be measured by measuring dynamic viscoelasticity or the like of the anodic oxide film.

When the Young's modulus of the anodic oxide film is measured by the indentation test, the Young's modulus is influenced by the metal base material 15 in some cases. Therefore, generally, the indentation depth needs to be kept to be equal to or less than 1/3 of the thickness of the anodic oxide film. Accordingly, in order to accurately measure the Young's modulus of the anodic oxide film having a thickness of about tens of µm, it is preferable to measure the Young's modulus by using a nanoindenter that can measure the Young's modulus even when the indentation depth is about hundreds of nm.

The Young's modulus may be measured by using methods other than the aforementioned methods.

### «Method for manufacturing substrate»

Next, a method for manufacturing the substrate 1 of the present invention will be described.

First, the base material 12 is prepared. The base material 12 is formed to have a predetermined shape and size according to the size of the substrate 1 to be formed.

Thereafter, on a surface 12a and a rear surface 12b of the base material 12, the Al layer 14 is formed. The metal base material 15 is constituted in this way.

The method for forming the Al layer 14 on the surface 12a and the rear surface 12b of the base material 12 is not particularly limited, as long as the base material 12 and the Al layer 14 can be integrally bonded to each other such that adhesiveness can be established therebetween. As the method for forming the Al layer 14, for example, it is possible to use a gas phase method such as a vapor deposition method or a sputtering method, a plating method, and a pressure bonding method that is performed after the surface of the Al layer 14 is cleaned. As the method for forming the Al layer 14, from the viewpoint of cost and productivity, pressure bonding performed by means of rolling using a roll or the like is preferable. For example, by pressure-bonding the Al layer 14 having a thickness of 50 µm to the base material 12 made of stainless steel having a thickness of 150 µm, the metal base material 15 can be formed through cladding processing. The linear thermal expansion coefficient of the metal base material 15 obtained by the cladding processing can be reduced to be about 10 ppm/K.

Thereafter, the metal base material 15 is stretched, and in this state, on a surface 14a of the Al layer 14 of the metal base material 15 and the rear surface 12b, the anodic oxide film is formed as the insulating layer 16.

Hereinafter, the method for forming the anodic oxide film as the insulating layer 16 will be described.

The anodization processing can be performed by, for example, a known anodization processing apparatus using a so-called roll-to-roll method.

For forming the anodic oxide film as the insulating layer 16, the base material 12 of the metal base material 15 is used as an anode and dipped into an electrolytic solution together with a cathode, and voltage is applied between the anode and the cathode. In this way, the anodic oxide film can be formed. At this time, if the base material 12 comes into contact with the electrolytic solution, the base material 12 forms a local cell together with the Al layer 14. Therefore, the base material 12 that comes into contact with the electrolytic solution needs to be insulated in advance by being masked with a masking film (not shown in the drawing). That is, the end surface and the rear surface of the metal base material 15 excluding the surface 14a of the Al layer 14 need to be insulated in advance by using a masking film (not shown in the drawing). Herein, the masking method at the time of the anodization processing is not limited to the method of using the masking film. Examples of the masking method include a method of protecting the end surface and the rear surface of the metal base material 15 excluding the surface 14a of the Al layer 14 by using a jig, a method of protecting them by using rubber such that they become watertight, a method of protecting them by using a resist, and the like.

If necessary, before the anodization processing, the surface 14a of the Al layer 14 is subjected to washing processing, polishing and smoothing processing, or the like.

The anodization processing can also be performed in a state in which the metal base material 15 has been stretched further than when it is used at room temperature. The method for stretching the metal base material 15 further than when it is used at room temperature is not particularly limited, as long as the tensile force within a range in which elastic deformation occurs can be applied to the metal base material 15 in a tensile direction E (see Fig. 2A), or the metal base material 15 can be in a state of having a curvature. For example, in the case of using the roll-to-roll method, the tension at the time of transport is adjusted to apply tensile force to the metal base material 15, or alternatively, a transport path in an anodizing tank is caused to have a curved surface shape so as to give a curvature to the metal base material 15. If the anodization processing is performed in this state, it is possible to obtain an anodic oxide film in which the magnitude of the compressive strain is 0.005% to 0.25% at room temperature (23°C). In this case, the magnitude of the compressive stress acting on the anodic oxide film is 2.5 MPa to 300 MPa.

The state in which the metal base material 15 is used at room temperature refers to the state of the metal base material 15 at room temperature when the substrate 1 is used as a final product of a dye-sensitized solar cell.

After the anodization processing, the masking film (not shown in the drawing) is peeled off, and in this way, the aforementioned substrate 1 can be obtained.

In the case of performing sheet processing, it is preferable to stretch the metal base material 15 by fixing it to the anodizing tank by using a jig, and to perform the anodization processing in this state.

For the anodization processing, methods that are performed in the field of the related art can be used. As the electrolytic solution used for anodization, it is possible to use an aqueous electrolytic solution such as an inorganic acid, an organic acid, an alkali, a buffer solution, or a mixture of these and a non-aqueous electrolytic solution such as an organic solvent or a molten salt. Specifically, if a direct current or an alternate current is applied to the Al layer 14 in an aqueous solution or a non-aqueous solution that is composed of one kind or composed of two or more kinds of acidic bathing liquids such as sulfuric acid, oxalic acid, crotonic acid, formic acid, phosphoric acid, malonic acid, diglycolic acid, maleic acid, citraconic acid, acetylene carboxylic acid, malic acid, tartaric acid, citric acid, glyoxylic acid, phthalic acid, trimellitic acid, pyromellitic acid, sulfamic acid, benzenesulfonic acid, and amidosulfonic acid, the anodic oxide film can be formed on the surface 14a of the Al layer 14. During the anodization, carbon, Al, or the like is used as a cathode.

For the anodization processing, in addition to the acidic bathing liquid, an alkaline solution can be used. As the alkaline solution, sodium hydroxide, ammonium hydroxide, sodium phosphate, or the like can be used. Furthermore, a non-aqueous solution can also be used for the anodization processing. As the non-aqueous solution, formamide-boric acid bath, N-methylformamide (NMF)-boric acid bath, ethanol-tartaric acid bath, dimethyl sulfoxide (DMSO)-salicylic acid bath, or the like can be used. The NMF-boric acid bath refers to an electrolytic solution obtained by dissolving boric acid in N-methylformamide.

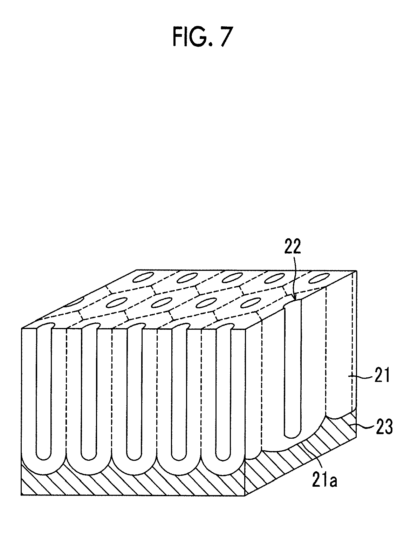

During the anodization processing, an oxidation reaction proceeds in a direction approximately perpendicular to the surface 14a of each Al layer 14, and an anodic oxide film is generated on the surface 14a of each Al layer 14. As shown in Fig. 7, the anodic oxide film has a structure in which a large number of minute columnar substances 21, each of which has the shape of a regular hexagon when seen in a plan view, are arranged without a void. In approximately the central portion of each of the minute columnar substances, a micropore 22 is opened which extends substantially straight in a depth direction but does not penetrate the columnar substance. Furthermore, a bottom surface 21a of each of the minute columnar substances has a roundish shape. Under the minute columnar substances, a non-porous barrier layer 23 (having a thickness of 0.02 µm to 0.1 µm in general) is formed.

Compared to a film having a non-porous structure solely composed of aluminium oxide, the anodic oxide film having the aforementioned porous structure has a low Young's modulus, has a high degree of bending resistance, and is highly resistant to cracks that occur due to a difference of thermal expansion at a high temperature.

In addition to the aforementioned method in which the anodization processing is performed in a state in which the metal base material 15 is physically stretched further than when it is used at room temperature, there is also a method of performing anodization in an aqueous solution at 50°C to 98°C which is a temperature higher than the temperature at which the metal base material 15 is actually used. In this case, the anodization can be performed by stretching the metal base material 50 further than when it is used at room temperature and maintaining the stretched state.

When the anodization is performed in the aqueous solution at 50°C to 98°C as described above, it is preferable to use an aqueous solution formed of an acid having a pKa (an acid dissociation constant) of 2.5 to 3.5 at a temperature of 25°C.

The boiling point of the aqueous solution used for the anodization processing equals 100°C + an increment of the boiling point. However, it is unrealistic to perform the anodization processing at the boiling point of the aqueous solution. Furthermore, as the temperature is increased, a by-product (boehmite) is generated. Therefore, the upper limit of the temperature of the aqueous solution is 98°C which is lower than the boiling point, and is preferably equal to or 95°C.

The aqueous solution is preferably an aqueous solution formed of an acid having a pKa of equal to or greater than 2.5 at 25°C, and the reason can be explained by the relationship between pKa and a dissolution rate of the anodic oxide film caused by an acid. It is known that there is a certain correlation between pKa (that is, the strength of an acid) and the dissolution rate of the anodic oxide film [for example, Metal Surface Technique, 20, 506

(1969)]. The growth of an actual anodic oxide film is a complicated reaction that proceeds while the generation of the anodic oxide film caused by an electrochemical reaction and the dissolution of the anodic oxide film caused by an acid are occurring at the same time. Therefore, the dissolution rate of the anodic oxide film is one of the main factors involved in the formation of the film.

When pKa is less than 2.5, at a high temperature, the dissolution rate of the anodic oxide film is too high compared to the generation rate of the anodic oxide film. Consequently, in some cases, the growth of the anodic oxide film becomes unstable, and the anodic oxide film ends up being a film having a relatively small film thickness and becomes insufficient for being used as the insulating layer 16.

The aqueous solution is preferably an aqueous solution formed of an acid having a pKa of equal to or less than 3.5 at 25°C, and particularly preferably an aqueous solution formed of an acid having a pKa of equal to or less than 3.0 at 25°C. If the pKa exceeds 3.5 at 25°C, even at a high temperature, the dissolution rate of the anodic oxide film is too low compared to the generation rate of the anodic oxide film. Consequently, in some cases, it takes too long to form the anodic oxide film, the film thickness thereof cannot be increased because an anodic oxide film called a barrier type is formed, and the anodic oxide film becomes insufficient for being used as the insulating layer 16.

Unlike the porous-type anodic oxide film of the present invention, the barrier-type anodic oxide film has a dense structure. It is known that the film thickness of the barrier-type anodic oxide film is nearly proportional to the anodization voltage. If the anodization is performed at a voltage exceeding 1,000 V, dielectric breakdown occurs in the anodic oxide film. Accordingly, it is difficult to obtain an anodic oxide film having a thickness exceeding 2 µm and to secure insulating properties in the atmosphere. Furthermore, being a dense film, the barrier-type anodic oxide film can be easily ruptured when stress is applied thereto, and crack resistance thereof is poorer than that of the porous-type anodic oxide film.

As the acid having a pKa (an acid dissociation constant) of 2.5 to 3.5, for example, it is possible to use malonic acid (2.60), diglycolic acid (3.0), malic acid (3.23), tartaric acid (2.87), citric acid (2.90), glyoxylic acid (2.98), phthalic acid (2.75), or trimellitic acid (2.5). As the solution used for anodization, a mixed solution of these acids having a pKa (an acid dissociation constant) of 2.5 to 3.5, other acids, bases, salts, additives, and the like may be used.

If the anodization is performed by using carboxylic acids having a pKa of 2.5 to 3.5, anions (called acid radicals) of the carboxylic acids become contained in the anodic oxide film, and therefore a carbon-containing anodic oxide film is formed.

In the present embodiment, if the anodization processing is performed on the metal base material 15 at a temperature of 50°C to 98°C by using an acidic aqueous solution of which a pH at 25°C is 2.5 to 3.5, it is possible to obtain an anodic oxide film in which the magnitude of the compressive strain is 0.005% to 0.1% at room temperature (23°C).

In this case, the magnitude of the compressive stress acting on the anodic oxide film is 2.5 MPa to 150 MPa.

After the anodization processing, the masking film (not shown in the drawing) is peeled off, and in this way, the aforementioned substrate 1 can be obtained.

As described above, the thickness of the anodic oxide film as the insulating layer 16 is preferably 3 µm to 20 µm, more preferably 5 µm to 20 µm, and particularly preferably 5 µm to 15 µm.

The thickness of the anodic oxide film can be controlled by constant-current electrolysis, the current for constant-current electrolysis, the level of the voltage, and the time taken for the electrolysis.

If the metal base material 15 is electrolyzed in a neutral electrolytic solution such as boric acid, a dense anodic oxide film (a film composed solely of non-porous aluminium oxide) is formed instead of the anodic oxide film in which minute porous columnar substances are arranged. An anodic oxide film with a barrier layer having an increased thickness may be formed by a pore filling method in which a porous anodic oxide film is generated in an acidic electrolytic solution and then electrolyzed again in a neutral electrolytic solution. If the thickness of the barrier layer is increased, a film having a higher degree of insulating properties can be formed.

The electrolytic solution used in the pore filling processing is preferably an aqueous boric acid solution, and is preferably an aqueous solution obtained by adding borate containing sodium to an aqueous boric acid solution. The borate includes sodium octaborate, sodium tetraphenylborate, sodium tetrafluoroborate, sodium peroxoborate, sodium tetraborate, sodium metaborate, and the like. These borates are available in the form of an anhydride or a hydrate.

As the electrolytic solution used for pore filling processing, it is particularly preferable to use an aqueous solution obtained by adding 0.01 mol/L to 0.5 mol/L sodium tetraborate to an 0.1 mol/L to 2 mol/L aqueous boric acid solution. Aluminium ions are preferably dissolved in the electrolytic solution in an amount of 0 mol/L to 0.1 mol/L. The aluminium ions are chemically or electrochemically dissolved in the electrolytic solution by the pore filling processing. However, it is particularly preferable to use a method of electrolyzing the aluminium ions by adding aluminium borate in advance to the electrolytic solution. Moreover, a trace element contained in an aluminium alloy may be dissolved in the electrolytic solution.

In the present embodiment, micropores may be regularly formed in the anodic oxide film having the porous structure. That is, the anodic oxide film may have a regularized porous structure.

In order to regularly form micropores in the anodic oxide film having the porous structure, for example, the following anodization processing called a self-regularization method can be performed.

The self-regularization method is a method for improving regularity by means of eliminating factors that disturb the regular arrangement by using the properties in which the microprobes of the anodic oxide film are arranged regularly. Specifically, by using aluminium with high purity, anodic oxide film is formed at a low speed over a long period of time (for example, several hours to tens of hours) at a voltage appropriate for the type of the electrolytic solution, and then film removing processing is performed.

In the self-regularization method, the diameter of the micropores depends on the applied voltage. Therefore, if the applied voltage is controlled, the diameter of the micropores can be adjusted as intended to some extent.

Typical examples of the self-regularization method are described in J. Electrochem. Soc. Vol, 144, No. 5, May 1997, p. L128, Jpn. J. Appl. Phys., Vol, 35 (1996) Pt. 2, No. 1B, L126, Appl. Phys. Lett, Vol. 71, No. 19, 10 Nov 1997, p. 2771.

In the methods described in the known documents exemplified above, the film removing processing, in which the anodic oxide film is dissolved and removed, is performed for over 12 hours by using a mixed aqueous solution at a temperature of about 50°C containing crotonic acid and phosphoric acid. Herein, if a boiled aqueous solution is used for the processing, starting points of regularization are destroyed and disturbed, so the aqueous solution is used without being boiled.

In the anodic oxide film in which the micropores are regularly formed, the regularity is increased toward the portion of aluminium. Accordingly, first, the anodic oxide film is removed, and then the bottom portion of the anodic oxide film remaining in the portion of aluminium is exposed on the surface so as to obtain regular depressions. Therefore, in the film removing processing, aluminium is not dissolved, and only the anodic oxide film composed of aluminium oxide is dissolved.

Consequently, in the methods described in the known documents exemplified above, there is a huge variation in the micropore diameter between the micropores, but the variation (coefficient of variation) of the micropore diameter is equal to or less than 3%.

For example, for the anodization processing using the self-regularization method, it is possible to use a method of causing an aluminium material to conduct electricity by using the aluminium material as an anode in a solution with an acid concentration of 1% by mass to 10% by mass. As the solution used in the anodization processing, one kind of sulfuric acid, phosphoric acid, chromic acid, oxalic acid, sulfamic acid, benzenesulfonic acid, amidosulfonic acid, or the like can be used singly, or two or more kinds thereof can be used in combination.

After the anodization processing, the metal base material 15 in which the anodic oxide film that will become the insulating layer 16 has been formed is subjected to annealing processing. In this way, the substrate 1, to which compressive strain of 0.005% to 0.25% has been applied, can be formed as the insulating layer 16.

The annealing processing is performed on the anodic oxide film at a temperature of, for example, equal to or less than 600°C. Furthermore, the annealing processing is preferably performed under annealing conditions of a heating temperature of 100°C to 600°C and a holding time of 1 second to 100 hours. In this case, the heating temperature of the annealing processing is equal to or less than the softening temperature of the Al layer 14. If the annealing conditions are changed, a predetermined compressive strain can be obtained. As shown in Fig. 5, regarding the annealing conditions, if the heating temperature and the holding time are increased, the compressive strain of the anodic oxide film can be increased.

If the heating temperature of the annealing processing is less than 100°C, the compressing effect substantially cannot be obtained. In contrast, if the heating temperature of the annealing processing exceeds 600°C, the anodic oxide film may be cracked due to the difference in the linear thermal expansion coefficient between the metal base material 15 and the anodic oxide film. Therefore, the annealing processing needs to be performed at a temperature at which the anodic oxide film may not be cracked. When the temperature of an aluminium material used as the metal base material 15 is increased, aluminium is softened excessively, and therefore the base material 12 may be deformed. Accordingly, the heating temperature is preferably equal to or less than 300°C, more preferably equal to or less than 200°C, and particularly preferably equal to or less than 150°C. In contrast, when the metal base material 15 is used in which the Al layer 14 is disposed on at least one surface of the base material 12 composed of a metal different from aluminium, as the temperature is increased, an intermetallic compound is more easily formed in the interface between aluminium and the base material 12. If the intermetallic compound is formed excessively, peeling of the interlayer may occur. Consequently, the heating temperature is preferably equal to or less than 500°C, more preferably equal to or less than 400°C, and particularly preferably equal to or less than 300°C.

The compressing effect can be obtained even when the holding time of the annealing processing is very short. Therefore, the holding time is set to be equal to or longer than 1 second. In contrast, even when the holding time of the annealing processing exceeds 100 hours, the compressing effect is saturated. Therefore, the upper limit of the holding time is set to be 100 hours.

When the holding time of an aluminium material used as the metal base material 15 is increased, aluminium is softened excessively, creeping phenomenon occurs excessively, and therefore the base material may be deformed. In addition, in view of productivity, the holding time is preferably equal to or less than 50 hours, more preferably equal to or less than 10 hours, and particularly preferably equal to or less than 1 hour. In contrast, when the metal base material 15 is used in which an aluminium base material is disposed on at least one surface of the base material 12 composed of a metal different from aluminium, as the holding time is increased, an intermetallic compound is more easily formed in the interface between aluminium and the base material 12. If the intermetallic compound is formed excessively, peeling of the interface may occur. In addition, in view of productivity, the holding time is equal to or less than 10 hours, more preferably equal to or less than 2 hours, and particularly preferably equal to or less than 30 minutes.

As shown in Fig. 2C, when the metal base material 15b of the substrate 1 is constituted only with the Al layer 14, if the heating temperature of the Al layer 14 exceeds the softening temperature, the stretch amount of the substrate 1 is controlled by the anodic oxide film, and the metal base material 15 is not stretched. As a result, it is difficult to obtain the compressing effect, and the strength of the base material cannot be kept constant. Accordingly, when the metal base material is constituted only with the Al layer, it is preferable for the heating temperature of the annealing processing to be equal to or less than the softening temperature of the Al layer 14.

In the substrate 1 of the present embodiment, the internal stress of the anodic oxide film is caused to become a compressive stress at room temperature, and the magnitude of the strain thereof is set to be 0.005% to 0.25%, such that the compressive strain occurs in the anodic oxide film as the insulating layer 16. Therefore, cracks do not easily occur, the anodic oxide film has excellent crack resistance, and a metal base material with an insulating layer can be obtained.

Furthermore, the substrate 1 uses an anodic oxide film of aluminium as the insulating layer 16, and the anodic oxide film of aluminium is ceramic. Accordingly, a chemical change does not easily occur even at a high temperature, and the anodic oxide film can be used as the insulating layer 16 having high reliability as long as cracks do not occur in the anodic oxide film. Consequently, the substrate 1 is resistant to thermal strain and can be used as a heat-resistant substrate.

In addition, in the substrate 1, the anodic oxide film as the insulating layer 16 is in a state of having a compressive strain. Therefore, even if the substrate is manufactured by integrated production by means of the roll-to-roll processing, cracks do not easily occur in the substrate, and the substrate is resistant to bending strain.

When tensile strain acts on the substrate at room temperature, and thus fissures or cracks occur, because the tensile strain acts to broaden the fissures or cracks, the fissures and cracks broaden. As a result, the substrate 1 cannot maintain insulating properties.

If a dye-sensitized solar cell using the substrate 1 is installed in an outdoor space, even when the Al layer 14 or the anodic oxide film as the insulating layer 16 becomes defective due to a great change in the temperature, external impact, or changes over time, reliable insulating properties can be obtained from the substrate over a long period of time.

For example, when the substrate 1 is exposed to an environment with a high temperature equal to or higher than 500°C, the metal base material 15 is stretched in the tensile direction E (see Fig. 2A). Therefore, the tensile stress imposed on the anodic oxide film due to the difference in the linear thermal expansion coefficient between the anodic oxide film as the insulating layer 16 and the metal base material 15 is reduced, and defects such as fissures and cracks do not occur. As a result, the heat-resistant temperature can be improved. In this way, it is possible to obtain the substrate 1 which does not undergo deterioration of performance even when being exposed to an environment with a high temperature equal to or higher than 500°C. Consequently, after paste of fine semiconductor particles is printed on the substrate, firing processing can be additionally performed on the substrate at a high temperature, and therefore a dye-sensitized solar cell having high photoelectric conversion efficiency can be prepared.

Furthermore, if the substrate 1 is used, a dye-sensitized solar cell can be manufactured by the roll-to-roll processing, and accordingly, the productivity can be greatly improved.

When the metal base material 15 in the substrate 1 has a double layer cladding structure composed of the base material 12 made of stainless steel and the Al layer 14, the anodization processing is performed after the base material 12 made of stainless steel is protected, the anodic oxide film as the insulating layer 16 is formed only on the surface 14a of the Al layer 14, and the stainless steel material is exposed on the rear surface of the metal base material 15. However, by performing the annealing processing in the atmosphere, an iron-based oxide film mainly composed of Fe₃O₄ is formed on the surface on which the stainless steel material is exposed.

Even when the dye-sensitized solar cell using the substrate 1 is installed in an outdoor space and undergoes a great change in the temperature or receives an external impact, because the compressive stress is being imposed on the insulating layer 16, the dye-sensitized solar cell is not easily damaged. That is, the dye-sensitized solar cell can exhibit reliability for a long period of time while being used.

### <First electrode>

The first electrode 2 contains a metal (for example, titanium, palladium, platinum, iron, stainless steel, silver, copper, aluminium, nickel, zinc, molybdenum, tantalum, niobium, zirconium, or an alloy of these), a conductive polymer (poly(3,4-ethylenedioxythiophene), a polythiophene derivative, or polyaniline), and the like, but the components of the first electrode 2 are not limited to these. The metal may be plated with nickel, tin, or the like.

As the first electrode 2, titanium, palladium, platinum, and stainless steel are preferable, and titanium and stainless steel are more preferable. The stainless steel is preferably 316 stainless steel, 332 stainless steel, and the like.

The thickness of the first electrode 2 is preferably equal to or greater than 1 µm and equal to or less than 400 µm, and more preferably equal to or greater than 10 µm and equal to or less than 200 µm.

### <Porous semiconductor fine particle layer>

In the present invention, the porous semiconductor fine particle layer can be obtained by coating the substrate 1 with a semiconductor fine particle dispersion and heating the dispersion.

As the porous semiconductor fine particles, fine particles of chalcogenide (for example, oxide, sulfide, or selenide) of a metal or perovskite of a metal are preferably used. Examples of the chalcogenide of a metal preferably include oxide, cadmium sulfide, cadmium selenide, and the like of titanium, tin, zinc, tungsten, zirconium, hafnium, strontium, indium, cerium, yttrium, lanthanum, vanadium, niobium, or tantalum. Examples of the perovskite preferably include strontium titanate, calcium titanate, and the like. Among these, titanium oxide (titania), zinc oxide, tin oxide, and tungsten oxide are particularly preferable, and titanium oxide (titania) is most preferable.

Semiconductors include an n-type semiconductor containing electrons as carriers involved in conduction of electricity and a p-type semiconductor containing holes as carriers involved in conduction of electricity. In view of the photoelectric conversion efficiency, the element used in the present invention is preferably the n-type semiconductor. The n-type semiconductor includes an intrinsic semiconductor (or an i-type semiconductor), which does not have an impurity level and in which the concentration of carriers resulting from the conduction-band electrons is the same as the concentration of carriers resulting from the holes in the valance electron band, and an n-type semiconductor having a high electron carrier concentration due to the structural defect resulting from impurities. The n-type semiconductor preferably used in the present invention includes TiO_{2,} TiSrO₃, ZnO, Nb₂O₃, SnO₂, WO₃, Si, CdS, CdSe, V₂O₅, ZnS, ZnSe, SnSe, KTaO₃, FeS₂, PbS, InP, GaAs, CuInS₂, CuInSe₂, and the like. Among these n-type semiconductors, TiO₂, ZnO, SnO₂, WO₃, and Nb₂O₃ are most preferable. Furthermore, a semiconductor material obtained by combining a plurality of these semiconductors is also preferably used.

For the purpose of maintaining the viscosity of the semiconductor fine particle dispersion at a high level, the particle size of the semiconductor fine particles is preferably equal to or greater than 2 nm and equal to or less than 50 nm in terms of the average particle size of primary particles. Moreover, the semiconductor fine particles are preferably ultrafine particles having a particle size of equal to or greater than 2 nm and equal to or less than 30 nm in terms of the average particle size of primary particles. Two or more kinds of fine particles having different particle size distribution may be mixed together, and in this case, the average size of small particles is preferably equal to or less than 5 nm. In addition, for the purpose of improving a light capturing rate by scattering incidence light, a small amount of large particles having an average particle size of greater than 50 nm may be added to the aforementioned ultrafine particles. In this case, the amount of the large particles contained in the ultrafine particles is preferably equal to or less than 50% of the mass of the particles having an average particle size of equal to or less than 50 nm, and more preferably equal to or less than 20% of the mass of the same particles. The average particle size of the large particles that are added to and mixed with the ultrafine particles for the purpose described above is preferably equal to or greater than 100 nm and more preferably equal to or greater than 250 nm.

As the method for preparing the semiconductor fine particles, the sol-gel method described and "Science of Sol-Gel Method" (Sumio Sakka, Agne-Shofu Corporation, 1998), "Thin Film Coating Technique by Sol-Gel Method" (TECHNICAL INFORMATION INSTITUTE CO., LTD., 1995), and the like as well as the sol-gel method described in "Synthesis and Size/Shape Control of Monodispersed Particles by Sol-Gel Method as New Synthesis Method" (Tadao Sugimoto, Vol. 35, No. 9, pp. 1012-1018, 1996) are preferable. Furthermore, a method developed by Evonik Degussa Co., Ltd. is also preferable in which an oxide is prepared by performing hydrolysis of chloride in an acid hydrogen salt at a high temperature. When the semiconductor fine particles are composed of titanium oxide, any of the aforementioned sol-gel method, gel-sol method, and the method of performing hydrolysis of chloride in an acid hydrogen salt at a high temperature is preferable. Moreover, it is possible to use the sulfuric acid method and the chlorine method described in "Titanium Oxide, Physical Properties and Applied Technology" (Manabu Seino, GIHODO SHUPPAN Co., Ltd., 1997). As the sol-gel method, the method described in "Journal of American Ceramic Society" (Barbe et al., Vol. 80, No. 12, pp. 3157-3171, 1997) or the method described in "Chemistry of Materials" (Burnside et al., Vol. 10, No. 9, pp. 2419-2425) is also preferable.

In addition, preferable examples of the method for manufacturing titania nanoparticles as the semiconductor fine particles include the method of performing flame hydrolysis of titanium tetrachloride (JP1994-511113A(JP-H06-511113A)), a method of combusting titanium tetrachloride (JP2003-327432A), the hydrolysis of a stable chalcogenide complex (JP2001-85076A), the hydrolysis of orthotitanic acid (JP2004-161589A and JP2004-238213A), a method of forming semiconductor fine particles from a soluble portion and an insoluble portion and then dissolving and removing the soluble portion (JP2002-246620A), hydrothermal synthesis of an aqueous peroxide solution (JP2003-92154A), and a method for manufacturing titanium oxide fine particles having a core/shell structure by a sol-gel method (JP2004-10403A).

Examples of the crystal structure of titania include an anatase structure, a brookite structure, and a rutile structure, and among these, an anatase structure and a brookite structure are preferable. Preferable examples of the crystal structure include those exemplified in JP1999-339867A (JP-H11-339867A), JP2001-43907A, and JP2001-43907A. Furthermore, preferable physical properties of titanium oxide are described in, for example, EP1338563A2, US2004/0161380A, US6075203A, US6444189B, US6720202B, CN1540772A, JP2001-283942A, and JP2001-212457A.

Titania nanotubes, titania nanowires, or titania nanorods may be mixed with titania fine particles. Preferable examples of the titania nanotubes, titania nanowires, or titania nanorods are described in JP2003-168495A, JP2003-251194A, JP2004-175586A, JP2004-175587A, JP2004-175588A, JP2004-311354A, JP2004-311355A, JP2004-319661A, and JP2005-162584A.

Titania may be doped with a nonmetallic element or the like. Preferable examples of the nonmetallic element are described in JP2000-235874A, JP2003-252624A, JP2002-25637A, JP2003-187881A, JP2003-187882A, JP2003-179244A, JP2004-87148A, JP2004-119279A, JP2005-93944A, JP2005-64493A, JP2003-257507A, and JP2003-323920A. As additives added to titania, in addition to a dopant, a binder for improving necking or an additive added to the surface for preventing back electron transfer may be used. Preferable examples of the additives include ITO particles, SnO particles (JP1999-283682A (JP-H11-283682A)) and JP2001-345125A), whiskers (JP2003-163037A), fibrous graphite/carbon nanotubes (JP2003-163037A), a zinc oxide necking connector (JP2003-273381A), a fibrous substance such as cellulose (JP2003-123861A), metals (JP2000-285975A and JP2001-35551A), organic silicon (JP2000-294304A), dodecylbenzenesulfonic acid (JP2000-260493A), a charge transfer binding molecule of a silane compound and the like (JP2000-323192A and JP2001-102103A), a potential gradient-type dendrimer (JP2004-213908A), and the like.

For the purpose of eliminating defect on the surface of titania, titania may be subjected to an acid-base reaction or an oxidation-reduction reaction before a dye is adsorbed onto the titania. The acid-base reaction is described in, for example, JP2000-101106A, JP2002-293541A, JP2003-297441A, JP2003-297442A, and JP2004-235240A. Furthermore, as described in JP1996-81222A (JP-H08-81222A), JP2000-285980A, JP2004-158243A, JP2004-247104A, and the like, the titania may be subjected to etching, oxidation processing, dehydrogenation processing, and the like or may be treated with hydrogen peroxide, UV-ozone, oxygen plasma, and the like.

Examples of the method for preparing the semiconductor fine particle dispersion include the aforementioned sol-gel method, a method of precipitating a semiconductor in the form of fine particles in a solvent at the time of synthesizing the semiconductor and using the resultant as is, a method of pulverizing the fine particles so as to obtain ultrafine particles by irradiating the fine particles with ultrasonic waves or the like, a method of mechanically pulverizing and grinding a semiconductor by using a mill or a mortar, and the like. As the solvent for dispersion, water and/or various organic solvents can be used. Examples of the organic solvents include alcohols such as methanol, ethanol, isopropyl alcohol, citronellol, and terpineol, ketones such as acetone, esters such as ethyl acetate, dichloromethane, acetonitrile, and the like.

If necessary, at the time of dispersing the semiconductor fine particles, for example, a polymer such as polyethylene glycol, hydroxyethyl cellulose, or carboxymethyl cellulose, a surfactant, an acid, or a chelating agent may be used as a dispersion aid in a small amount.

If the viscosity of the semiconductor fine particle dispersion is too high, the dispersion aggregates, and therefore a film cannot be formed. Inversely, if the viscosity of the semiconductor fine particle dispersion is too low, the dispersion becomes watery, and therefore a film cannot be formed.

Accordingly, the viscosity of the dispersion is preferably 10 N·s/m² to 300 N·s/m² at 25°C, and more preferably 50 N·s/m² to 200 N·s/m² at 25°C.

As the coating method of the semiconductor fine particle dispersion, a roller method as an application method, a dipping method, or the like can be used. As a metering method, an air knife method, a blade method, or the like can be used. Furthermore, as a method in which the application method and the metering method can be used for the same portion, the wire bar method disclosed in JP1938-4589B (JP-S58-4589B) as well as the slide hopper method, the extrusion method, and the curtain method described in US2681294A, US2761419A, US2761791A, and the like are preferable. It is also preferable to perform the coating by means of a spin method or a spray method by using a general-purpose machine. As a wet printing method, three main printing methods including relief printing, offset printing, and gravure printing as well as the methods such as intaglio printing, rubber plate printing, and screen printing are preferable. According to the viscosity of the dispersion or the wet thickness, a preferable coating method is selected from among the above methods. The semiconductor fine particle dispersion of the present invention has high viscosity and is viscid. Therefore, in some cases, the dispersion exhibits a strong cohesion force and is not smoothly applied onto the first electrode. In this case, if the surface of the first electrode is cleaned and hydrophilized by being treated with UV and ozone, the binding strength between the semiconductor fine particle dispersion coating the first electrode and the surface of the first electrode is increased, and accordingly, the substrate is easily coated with the semiconductor fine particle dispersion.

The total thickness of the semiconductor fine particle layer is preferably 0.1 µm to 100 µm. The thickness of the semiconductor fine particle layer is more preferably 1 µm to 30 µm, and even more preferably 2 µm to 25 µm. The amount of the semiconductor fine particles supported on 1 m² of the first electrode is preferably 0.5 g to 400 g, and more preferably 5 g to 100 g.

The semiconductor fine particle layer formed by coating is subjected to heating processing so as to enhance the electronic contact between the semiconductor fine particles, to improve the adhesiveness between the semiconductor fine particle layer and the first electrode, or to dry the semiconductor fine particle dispersion applied. By the heating processing, the porous semiconductor fine particle layer can be formed.

The heating conditions are set such that the heating processing is preferably performed for 0.1 hours to 20 hours at 100°C to 650°C, and more preferably performed for 0.5 hours to 15 hours at 150°C to 600°C.

When a polymer material layer is laminated on a conductive layer to form the first electrode 2, the heating conditions are set such that the heating processing is preferably performed for 0.1 hours to 20 hours at 100°C to 500°C, and more preferably performed for 0.2 hours to 15 hours at 100°C to 450°C.

In addition to the heating processing, the processing using light energy (processing of irradiating the semiconductor fine particle layer with light) can also be performed. For example, when titanium oxide is used as the semiconductor fine particles, the surface of the semiconductor fine particles may be activated by irradiating the fine particles with light such as ultraviolet light that the semiconductor fine particles absorb, or alternatively, only the surface of the semiconductor fine particles can be activated by laser light or the like. If the semiconductor fine particles are irradiated with light that the fine particles absorb, the impurities having been adsorbed onto the surface of the fine particles are decomposed due to the activation of the surface of the fine particles. As a result, the semiconductor fine particles can be in a state preferable for achieving the purpose of enhancing the electronic contact between the semiconductor fine particles and improving the adhesiveness between the semiconductor fine particle layer and the first electrode. If the semiconductor fine particles are photoexcited, it is possible to clean up the impurities mixed into the fine particle layer by photodecomposition, and to enhance the physical bonding between the fine particles.

The first electrode 2 may be coated with the semiconductor fine particle dispersion and subjected to another processing in addition to heating or light irradiation. Preferable examples of the method of the processing include conduction processing, chemical processing, and the like.

After the first electrode 2 is coated with semiconductor fine particle dispersion, pressure may be applied thereto. Examples of the method of applying pressure include the methods described in JP2003-500857A, JP2002-93475A, JP2003-282160A, and JP2004-214129A. Examples of the method of light irradiation processing include the methods described in JP2001-357896A, JP1999-219734A (JP-H11-219734A), JP2004-314313A, JP2005-142446A, and JP2001-247314A. Examples of the method of plasma processing, microwave processing, or conduction processing include the methods described in JP2002-353453A, JP2003-308893A, JP2004-265662A, JP2004-327369A, JP2004-342319A, JP2005-116415A, JP2005-139498A, and JP2004-273770A. Examples of the method of the chemical processing include the methods described in JP2001-357896A, JP2002-280327A, JP2003-281947A, JP2005-520314A, and JP2003-297442A.

Examples of the method of coating the first electrode 2 with the semiconductor fine particles include (1) a wet method such as a method of coating the first electrode 2 with the semiconductor fine particle dispersion or a method of coating the first electrode 2 with a precursor of semiconductor fine particles described in JP2664194B and hydrolyzing the precursor by using moisture in the air so as to obtain a semiconductor fine particle film. Examples of the method of preparing the semiconductor fine particle dispersion include a method of grinding the semiconductor fine particles by using a mortar, a method of dispersing the semiconductor fine particles while pulverizing them by using a mill, a method of precipitating a semiconductor in a solvent in the form of fine particles at the time of synthesizing the semiconductor and use the resultant as is, and the like. Preferable examples of the method include the methods described in JP1999-144772A (JP-H11-144772A), JP2005-100792A, EP1300897A1, JP2002-324591A, JP2002-145615A, JP2003-176130A, and JP2004-79610A.

Examples of the dispersion medium for the coating liquid used in the (1) wet method include water and various organic solvents (for example, methanol, ethanol, t-butanol, dichloromethane, acetone, acetonitrile, and ethyl acetate). Preferable examples thereof include the dispersion media described in JP1994-511113A (JP-H06-511113A), CN144292A, JP1999-11912A (JP-H11-11912A), JP2000-294814A, JP2000-319018A, JP2000-319018A, JP2000-319018A, JP2002-145614A, JP2002-75477A, JP2004-193321A, WO02/067357A, JP2004-207205A, JP2004-111348A, JP2004-186144A, JP2003-282162A, JP2005-142011A, JP2005-174695A, JP2005-85500A, JP1999-343118A (JP-H11-343118A), JP1999-354169A (JP-H11-354169A), JP2000-106222A, JP2003-246621A, JP2003-51345A, JP2004-158551A, JP2001-358348A, JP2003-217693A, and the like. If necessary, at the time of dispersing the semiconductor fine particles, a polymer, a surfactant, an acid, or a chelating agent may be used as a dispersion aid in a small amount.

As the method of coating the first electrode 2 with the semiconductor fine particles, the (1) wet method described above, (2) a dry method, and (3) other methods may be used concurrently.

Preferable examples of the (2) dry method include the methods described in JP2000-231943A, JP2002-170602A, JP2001-345124A, JP2003-197280A, JP2003-123854A, JP2003-123852A, JP2003-123853A, JP2005-39013A, JP2004-39286A, and JP2005-104760A.

Preferable examples of the (3) other methods include the methods described in JP2002-134435A, US2004/0123896A, JP2004-327265A, JP2003-500857A, JP2005-85491A, JP2003-98977A, JP2002-299665A, JP2003-243053A, JP2004-253331A, JP1999-310898A (JP-H11-310898A), JP2003-257507A, JP2003-323920A, US2004/0084080A, US2004/0121068A, JP2004-319873A, JP1998-112337A (JP-H10-112337A), JP1999-6098A (JP-H11-6098A), JP2000-178791A, JP2000-178792A, JP2004-103420A, and JP2003-301283A.

It is preferable that the semiconductor fine particles have a large surface area such that a large amount of a dye can be adsorbed onto the particles. For example, in a state in which the first electrode 2 has been coated with the semiconductor fine particles, the surface area of the particles is preferably at least 10 times the projected area thereof and more preferably at least 100 times the projected area thereof. The upper limit of the surface area is not particularly limited, but generally, the surface area is about 5,000 times the projected area. Examples of the preferable structure of the semiconductor fine particles include the structures of semiconductor fine particles described in JP2001-93591A, JP2001-257012A, JP2001-196106A, JP2001-273936A, and EP1207572A1.

Generally, as the thickness of the semiconductor fine particle layer is increased, the amount of the dye that can be supported on unit area is increased, and therefore light absorption efficiency is increased. However, because the generated electrons are diffused farther away, the loss resulting from charge recombination is also increased. The preferable thickness of the semiconductor fine particle layer varies with the use of the element. However, typically, the thickness is preferably 0.1 µm to 100 µm. When the element is used as a photoelectrochemical cell, the thickness is preferably 1 µm to 50 µm, and more preferably 3 µm to 30 µm.

The wet method is a method of coating the first electrode 2 with the semiconductor fine particle layer or the precursor thereof and further activating the semiconductor fine particles or the precursor. Examples of the wet method include the method described in JP1998-290018A (JP-H10-290018A) in which a mixture of a semiconductor and a conductive compound is heated at a low temperature, a method of using a precursor (examples of the precursor include (NH₄)₂TiF₆ described in JP2001-110462A, titanium peroxide described in JP2001-247314A, and the metal alkoxide·metal complex·metal organic acid salt described in JP1999-219734A (JP-H11-219734A)), the method described in JP2005-520314A in which slurry containing a metal organic oxide (such as alkoxide) is applied and treated with heat, light, or the like so as to form a semiconductor film, the method described in JP2003-2819847A in which the pH of slurry containing an inorganic precursor is specified, and the method described in JP2005-056627A in which the pH of slurry and the properties of titania particles dispersed are specified.

A binder may be added to the aforementioned slurry as long as the amount of the binder is small. Examples of the binder include the cellulose described in JP2003-109678A or JP2003-123861A, the fluorine polymer described in JP2003-272722A, the crosslinked rubber described in JP2004-47261A, the polybutyl titanate described in JP2005-516365A, the carboxymethyl cellulose described in JP2005-135798A, and the like.

Examples of the technique relating to the formation of a semiconductor or a precursor thereof include the method described in JP2003-308890A in which hydrophilization is performed by a physical method such as corona discharge, plasma irradiation, or UV irradiation, chemical processing using an alkali (JP2004-119120A), polyethylene dioxythiophene, polystyrene sulfonic acid (JP2005-169228A), and the like, the formation of an interlayer for bonding by using polyaniline as described in JP2003-297443A, and the like.

Examples of the dry method include vapor deposition, sputtering, aerosol deposition, and the like. Preferable examples of the dry method include the methods described in JP2005-39013A, JP2004-074609A, JP3265481B, JP2003-100359A, and JP2004-39286A.

Furthermore, the electrophoresis method or the electrodeposition method described in JP2002-100146A and JP2004-311354A may be used.

In addition, a method may be used in which a dye-sensitized solar cell (DSC) is prepared on a heat-resistant substrate and then transferred to the first electrode 2. Preferable examples of the method include the method described in JP2002-184475A in which the DSC is transferred through an ethylene-vinyl acetate (EVA) copolymer, the method described in JP2003-98977A in which a semiconductor layer and a conductive layer are formed on an inorganic salt-containing sacrificial substrate, which can be removed by using ultraviolet rays or an aqueous solvent, and then transferred to an organic substrate, and then the sacrificial substrate is removed, and the like.

### <Photosensitive body>

If a dye is adsorbed onto the porous semiconductor fine particle layer, which is obtained by coating the first electrode 2 with, for example, the semiconductor fine particle dispersion and then heating the dispersion, a photosensitive body (also referred to as a photosensitive layer) can be formed in the photoelectric conversion element of the present invention. The photosensitive body is designed according to the purpose, and may be constituted with a single layer or multiple layers. A single photosensitive body layer may contain one kind of dye or a mixture of plural kinds of dyes. However, as at least one kind of the dyes, the dye which will be described later is used. The photosensitive body of the photoelectric conversion element of the present invention has the porous semiconductor fine particle layer onto which the dye has been adsorbed. Herein, the laminate composed of the substrate, the first electrode, and the photosensitive body is also referred to as a light receiving electrode.

### <Dye>

The dye that can be used in the photoelectric conversion element of the present invention is not particularly limited. Examples of the dye include organic dyes and complex dyes, and among these, a metal complex dye is preferable. Preferable examples of the metal complex dye include metal complex dyes containing Ru atoms, Os atoms, or Zn atoms. Among these, metal complex dyes containing Ru atoms or Os atoms are preferable, and metal complex dyes containing a Ru metal element are particularly preferable.

Examples of the dye include the Ru complex dyes disclosed in JP3731752B, JP2002-512729A, JP2001-59062A, JP2001-6760A, JP3430254B, JP2003-212851A, WO2007/91525A, JP2001-291534A, JP2012-12570A, JP2012-211587, and JP2012-232400, the squarylium cyanine dyes described in JP1999-214730A (JP-H11-214730A), JP2012-144688A, JP2012-84503A, and the like, the organic dyes described in JP2004-063274A, JP2005-123033A, JP2007-287694A, JP2008-71648A, JP2007-287694A, and WO2007/119525A, the porphyrin dyes described in Angew. Chem. Int. Ed., 49, 1-5 (2010) and the like, and the phthalocyanine dyes described in Angew. Chem. Int. Ed., 46, 8358 (2007) and the like.

In order to cause the dye to be adsorbed onto the semiconductor fine particles, it is preferable to dip the thoroughly dried semiconductor fine particles in a dye solution for dye adsorption composed of a solution and a dye for a long period of time. The solution used in the dye solution for dye adsorption can be used without particular limitation, as long as the solution can dissolve a dye. For example, it is possible to use ethanol, methanol, isopropanol, toluene, t-butanol, acetonitrile, acetone, and n-butanol. Among these, ethanol and toluene can be preferably used.

If necessary, the dye solution for dye adsorption composed of a solution and a dye may be heated to 50°C to 100°C. The adsorption of a dye may be performed before or after coating of the semiconductor fine particle dispersion. Furthermore, the dye may be adsorbed onto the semiconductor fine particles by coating the first electrode 2 with the semiconductor fine particle dispersion and the dye solution for dye adsorption at the same time. Any dye not adsorbed onto the semiconductor fine particles is removed by washing. When the coating film is fired, the adsorption of the dye is preferably performed after firing. After the firing, it is particularly preferable to cause the dye to be rapidly adsorbed onto the semiconductor fine particles before water is adsorbed onto the surface of the coating film. One kind of dye or a mixture of plural kinds of dyes may be adsorbed onto the semiconductor fine particles. For example, the complex dyes described in US4927721A, US4684537A, US5084365A, US5350644A, US5463057A, US5525440A, and JP1995-249790A (JP-H07-249790A) may be mixed together. The dyes to be mixed together are selected such that the wavelength band of photoelectric conversion broadens as much as possible. When the dyes are mixed together, all of the dyes need to be dissolved so as to form the dye solution for dye adsorption.

The total amount of the dye used is preferably 0.01 mmol to 100 mmol, more preferably 0.1 mmol to 50 mmol, and particularly preferably 0.1 mmol to 10 mmol per 1 m² of the substrate. In this case, the amount of the dye used in the present invention is preferably equal to or greater than 5 mol%.

The amount of the dye adsorbed onto the semiconductor fine particles is preferably 0.001 mmol to 1 mmol, and more preferably 0.1 mmol to 0.5 mmol with respect to 1 g of the semiconductor fine particles.

If the dye is used in the amount described above, a sensitizing effect in the semiconductor fine particles is sufficiently obtained. In contrast, if the amount of the dye is small, the sensitizing effect becomes insufficient. If the amount of the dye is too great, the dye having not been adsorbed onto the semiconductor fine particles floats, and therefore the sensitizing effect is reduced.

For the purpose of reducing the interaction between the dye molecules such as association, a colorless compound may be adsorbed onto the semiconductor fine particles together with the dye. Examples of a hydrophobic compound that is adsorbed onto the semiconductor fine particles together with the dye include a steroid compound (for example, cholic acid or pivaloyl acid) having a carboxyl group.

After the dye is adsorbed onto the semiconductor fine particles, the surface of the semiconductor fine particles may be treated with amines. Preferable examples of the amines include 4-tert-butylpyridine, polyvinylpyridine, and the like. When the amines are in the form of a liquid, they may be used as is or may be used by being dissolved in an organic solvent.

### <Charge transfer body>

Hereinafter, the charge transfer body will be described.

The charge transfer body 4 is a layer that functions to replenish the oxidized dye with electrons and is disposed between the light receiving electrode 7 and a counter electrode 9. Typical examples of the charge transfer body include a liquid obtained by dissolving redox pairs in an organic solvent, a so-called gel electrolyte obtained by impregnating a polymer matrix with a liquid obtained by dissolving redox pairs in an organic solvent, a molten salt containing redox pairs, and the like.

Examples of the redox pairs include a combination of iodine and an iodide (for example, lithium iodide, tetrabutylammonium iodide, or tetrapropylammonium iodide), a combination of alkylviologen (for example, methylviologen chloride, hexylviologen bromide, or benzylviologen tetrafluoroborate) and a reduced product thereof, a combination of polyhydroxybenzenes (for example, hydroquinone and naphthohydroquinone) and an oxidized product thereof, a combination of a divalent iron complex and a trivalent iron complex (for example, potassium ferricyanide and potassium ferrocyanide), and the like. Among these, a combination of iodine and an iodide is preferable. Examples of the organic solvent dissolving these redox pairs include nonprotonic polar solvents (for example, acetonitrile, propylene carbonate, ethylene carbonate, dimethyl formamide, dimethyl sulfoxide, sulfolane, 1,3-dimethyl imidazolinone, and 3-methyl oxazolidinone), the water-containing electrolytic solution described in JP2002-110262A, the electrolyte solvents described in JP2000-36332A, JP2000-243134A, WO00/54361A, and the like. As the organic solvent, acetonitrile, methoxypropionitrile, propylene carbonate, and γ-butyrolactone are preferable.

Examples of additives added to the electrolyte include 4-tert-butylpyridine described above, the pyridine and pyridine-based compounds described in JP2003-331986A, the aminopyridine-based compounds described in JP2004-47229A, JP2004-171821A, and the like, the benzimidazole-based compounds described in JP2004-273272A, the aminotriazole-based compounds and the aminothiazole-based compounds described in JP2005-38711A, the imidazole-based compounds described in JP2005-108663A, quinoline-based compounds (JP2005-135782A), aminotriazine-based compounds (JP2005-183166A), urea derivatives (JP2003-168493A), amide compounds (JP2004-103404A), pyrimidine-based compounds (JP2004-247158A), and heterocyclic rings not containing nitrogen (JP2005-166612A, JP2005-166613A, and JP2005-16615A).

In order to improve the efficiency, a method of controlling water content of the electrolytic solution may be used. Preferable examples of the method of controlling water content include a method of controlling concentration (JP2000-323189A and JP2001-76774A), a method of adding a dehydrating agent to the electrolytic solution (JP2002-237335A and JP2002-237335A), and the like.

As described in JP2004-235011A, in order to reduce the toxicity of iodine, a clathrate compound such as iodine and cyclodextrin may be used. Furthermore, as described in JP2003-25709A, a method of consistently supplying water may be used. In addition, as described in JP3462115B, cyclic amidine may be used, or an antioxidant (JP2004-39292A), a hydrolysis inhibitor (JP2004-111276A), a decomposition inhibitor (JP2004-111277A), and zinc iodide (JP2004-152613) may be added.

A molten salt may be used as the electrolyte, and preferable examples of the molten salt include ionic liquid containing imidazolium-type or triazolium-type cations (JP1997-507334A (JP-H09-507334A), JP1996-259543A (JP-H08-259543A), JP2003-031270A, JP2005-112733A, JP2005-116367A, JP2005-112733A, JP2003-68374A, JP2003-92153A, JP2004-241378A, JP2005-85587A, and JP2004-87387A), an oxazolium-based molten salt (JP2000-53662A), a pyridinium-based molten salt (JP2000-58891A, JP2001-23705A, JP2001-167630A, JP2001-256828A, and JP2001-266962A), a guanidium-based molten salt (JP2001-35253A), and a combination of these (JP2000-90991A and JP2001-35552A). Specific Anions may be used in combination with these cationic molten salts, and for example, specific anions described in JP2002-75442A, JP2001-75443A, JP2002-170426A, JP2002-298913A, JP2002-367426A, and JP2003-017148A may be used in combination with the cationic molten salts. Additives may be added to these molten salts, and preferable examples of the additives include the additives described in JP2001-67931A, JP2001-160427A, JP2002-289267A, JP2002-289268A, JP2000-90991A, JP2000-100485A, JP2001-283943A, and the like. As described in JP2002-319314A or JP2002-343440A, the additives may have a liquid crystalline substituent. Furthermore, the quaternary ammonium salt-based molten salts described in JP2005-104845A, JP2005-104846A, JP2005-179254A, and the like may also be used.

Examples of molten salts other than the above include the molten salts described in JP2005-139100A and JP2005-145927A, the molten salt caused to exhibit fluidity at room temperature by a method of mixing polyethylene oxide with lithium iodide and at least one kind of lithium salt (for example, lithium acetate or lithium perchlorate), and the like. In this case, the amount of a polymer added thereto is 1% by mass to 50% by mass. Moreover, the electrolytic solution may contain γ-butyrolactone. If the electrolytic solution contains γ-butyrolactone, the iodide ions are more efficiently diffused, and thus the conversion efficiency is improved.

A gallant may be added to the electrolytic solution containing the electrolyte and a solvent such that the electrolytic solution becomes gel, and in this way, the electrolyte may be solidified. Examples of the gallant include organic compounds having a molecular weight of equal to or less than 1,000 (JP1999-185836A (JP-H11-185836A), JP2000-36608A, and JP2000-58140A), Si-containing compounds having a molecular weight in a range of 500 to 5,000 (JP2003-203520A), organic salts obtained from a specific acidic compound and a basic compound (JP2003-203520A), sorbitol derivatives (JP2003-346928A), and polyvinyl pyridine (JP2004-227920A and JP2005-093370A).

In addition, a method of causing a matrix polymer, a crosslinked polymer compound or monomer, a crosslinking agent, and a solvent to be trapped in a polymer may be used.

Preferable examples of the matrix polymer include polymers having a nitrogen-containing heterocyclic ring in a repeating unit on a main chain or a side chain thereof or crosslinked substances obtained by reacting the aforementioned polymers with an electrophilic compound (JP1999-126917A (JP-H11-126917A), JP2000-86724A, and the like), polymers having a triazine structure or a ureide structure (JP2000-251532A), polymers containing a liquid crystalline compound (JP2000-319260A and JP2002-246066A), polymers having an ether bond (JP2000-150006A, JP2002-63813A, JP2001-338700A, and JP2002-75480A), polyvinylidene fluoride-based polymers (JP2003-303628A), polymers based on methacrylate or acrylate (JP2001-28276A and JP2001-210390A), thermosetting resins (JP2002-363414A and JP2002-305041A), crosslinked polysiloxane (JP2002-216861A), PVA (JP2002-175841A), clathrate compounds such as polyalkylene glycol and dextrin (JP2004-327271A), polymers to which a polymer containing oxygen or sulfur (JP2005-108845A) has been added, natural polymers (JP2005-71688A), and the like. Furthermore, to these matrix polymers, an alkali swellable polymer (JP2002-175482A), a polymer having a compound that can form a charge transfer body complex composed of a cationic moiety and iodine in a single polymer (JP2005-63791A), and the like may be added.

As the matrix polymer, polymers including a crosslinked polymer, which is obtained by reacting isocyanate having two or more functional groups with a functional group such as a hydroxyl group, an amino group, or a carboxyl group, may be used. Examples of such polymers include the matrix polymers described in JP2000-228234A, JP2002-184478A, JP2002-289271A, and JP2003-303630A. Furthermore, a crosslinked polymer composed of a hydrosilyl group and a compound having a double bond (JP2003-59548A) may be used. In addition, a crosslinking method (JP2003-86258A) in which polysulfonic acid, polycarboxylic acid, or the like is reacted with a metallic ion compound having two or more functional groups may be used.

Examples of the solvent that can be preferably used in combination with the aforementioned solidified electrolyte include a specific phosphoric acid ester (JP2000-100486A and JP2003-16833A), a mixed solvent containing ethylene carbonate (JP2004-87202A), a solvent having a specific dielectric constant (JP2004-335366A), the solvents described in JP2003-16833Aand JP2003-264011A, and the like.

A liquid electrolyte solution may be held in a solid electrolyte film or pores, and examples of the method thereof include a method of using a conductive polymer film (JP1999-339866A (JP-H11-339866A), a fibrous solid (JP2000-357544A), or a solid on cloth such as a filter (JP2001-345125A). As described in JP2003-157914A, a specific combination composed of a gel electrolyte and a counter electrode formed of a conductive resin may be used.

Instead of the aforementioned liquid electrolyte and the solidified electrolyte, a solid charge transport system such as a p-type semiconductor or a hole transport material may be used. Preferable examples of the p-type semiconductor include CuI (JP2001-156314A, JP2001-185743A, JP2001-185743A, JP2001-230434A, JP2003-273381A, JP2003-234485A, JP2003-243681A, and JP2003-234486A) as well as CuSCN and p-SbAl (JP2003-258284A). Furthermore, preferable examples of the method for manufacturing the hole transport material are described in JP2003-331938A, JP2001-168359A, JP2001-196612A, JP2001-257370A, JP2002-246623A, JP2002-246624A, and JP2003-289151A.

In the present invention, if the charge transfer body is adjacent to and laminated on the photosensitive body having the porous semiconductor fine particle layer onto which a dye has been adsorbed, a dye-sensitized solar cell having high photoelectric conversion efficiency can be obtained. The charge transfer body is not particularly limited, and an organic hole transport material can be used. Preferable examples of the organic hole transport material include conductive polymers such as polythiophene (JP2000-106223A and JP2003-364304A), polyaniline (JP2003-264304A), polypyrrole (JP2000-106224A and JP2003-264304A), and polysilane (JP2001-53555A and JP2001-203377A), a spyro compound in which two rings share a central element such as C or Si having a tetrahedral structure (JP1999-513522A (JP-H11-513522A) and JP2001-525108A), aromatic amine derivatives such as triaryl amine (JP1999-144773A (JP-H11-144773A), JP1999-339868A (JP-H11-339868A), JP2003-123856A, JP2003-197942A, and JP2004-356281A), triphenylene derivatives (JP1999-176489A (JP-H11-176489A), nitrogen-containing heterocyclic derivatives (JP2001-85077A and JP2001-85713A), and liquid crystalline cyano derivatives (JP3505381B).

Functioning as an electron carrier, the redox pair needs to have a concentration to some extent. The total concentration of the redox pair is equal to or greater than 0.01 mol/l, more preferably 0.1 mol/l, and particularly preferably equal to or greater than 0.3 mol/l. In this case, the upper limit thereof is not particularly limited, but is generally about 5 mol/l.

### <Counter electrode>

The counter electrode is composed of a second electrode 5 and a transparent substrate 6.

The transparent substrate 6 is preferably a glass substrate or a plastic substrate. Furthermore, it is preferable that the transparent substrate 6 is substantially transparent. The "substantially transparent" means that the light transmittance thereof is equal to or greater than 10%. The light transmittance of the substrate is preferably equal to or greater than 50%, and particularly preferably equal to or greater than 80%. A light management function may be added to the surface of the transparent substrate 6. For example, an antireflection film described in JP2003-123859 that is obtained by alternately laminating an oxide film with a high refractive index and an oxide film with a low refractive index on each other may be formed on the surface of the transparent substrate 6, or the light guiding function described in JP2002-260746A may be added to the surface of the transparent substrate 6.

Examples of usable plastic include tetraacetyl cellulose (TAC), polyethylene terephthalate (PET), polyethylene naphthalate (PEN), syndiotactic polystyrene (SPS), polyphenylene sulfide (PPS), polycarbonate (PC), polyarylate (PAr), polysulfone (PSF), polyester sulfone (PES), polyetherimide (PEI), cyclic polyolefin, phenoxy bromide, and the like.

The second electrode 5 is preferably either an electrode onto which conductive metal oxide is deposited by sputtering or a mesh electrode. As the metal oxide, tin oxide is preferable, and indium-tin oxide and fluorine-doped oxide are particularly preferable. At this time, the amount of the conductive metal oxide is preferably 0.1 g to 100 g per 1 m² of a glass substrate or a plastic substrate. The thickness of the metal oxide is preferably 0.01 µm to 30 µm, more preferably 0.03 µm to 25 µm, and particularly preferably 0.05 µm to 20 µm.

The mesh electrode is formed of a conductive mesh material. Preferable conductive metal materials include metals (stainless steel, titanium, palladium, platinum, copper, silver, aluminium, nickel, an alloy of these, and the like) and conductive polymers (poly(3,4-ethylenedioxythiophene), polythiophene derivatives, and polyaniline). The average diameter of the mesh electrode is within a range of 0.1 µm to 500 µm, and the opening area thereof is within a range of about 40% to 95%.

It is preferable to add a function of shielding ultraviolet light to the counter electrode 9. For example, it is possible to use the method described in JP2001-185242A in which a fluorescent material that can convert ultraviolet light into visible light is allowed to present in the inside or on the surface of a plastic substrate as the transparent substrate 6. Furthermore, as another preferable method, a method of using an ultraviolet absorbent can also be used. Examples of methods of preferable embodiments include the methods of using an ultraviolet absorbent disclosed in JP1999-345991A (JP-H11-345991A), JP2002-25634A, JP2003-21769A, JP2004-227843A, JP2004-349129A, JP2002-134178A, and JP2003-100358A.

The functions described in JP1999-250944A (JP-H11-250944A), JP2003-308892A, and JP2003-282163A may also be added to the counter electrode 9.

The larger the cell area of a conductive film, the greater the value of resistance of the conductive film. Accordingly, a power collection electrode may be disposed on the substrate. Preferable examples of the shape and material of the power collection electrode are described in JP1999-266028A (JP-H11-266028A), JP2005-108467A, JP2003-203681A, JP2004-146425A, JP2004-128267A, JP2004-164970A, JP2004-327226A, JP2004-164950A, JP2005-78857A, JP2005-197176A, JP2004-164950A, JP2000-285977A, JP2002-314108A, and JP2003-123858A.

As described in JP2000-285974A, a gas barrier film and/or an ion diffusion preventing film may be disposed between a plastic substrate as the transparent substrate 6 and the second electrode 5. The gas barrier film may be either a resin film (for example, JP2000-282163A or JP2005-142086A) or an inorganic film (JP2005-142086A).

The present invention can be applied to the photoelectric conversion elements or the dye-sensitized solar cells described in JP4260494B, JP2004-146425A, JP2000-340269A, JP2002-289274A, JP2004-152613A, and JP1997-27352A (JP-H09-27352A). Furthermore, the present invention can also be applied to the photoelectric conversion elements or the dye-sensitized solar cells described in JP2004-152613A, JP2000-90989A, JP2003-217688A, JP2002-367686A, JP2003-323818A, JP2001-43907A, JP2000-340269A, JP2005-85500A, JP2004-273272A, JP2000-323190A, JP2000-228234A, JP2001-266963A, JP2001-185244A, JP2001-525108A, JP2001-203377A, JP2000-100483A, JP2001-210390A, JP2002-280587A, JP2001-273937A, JP2000-285977A, JP2001-320068A, and the like.

### «Method for manufacturing photoelectric conversion element and dye-sensitized solar cell»

As described above, the photoelectric conversion element of the present invention and the dye-sensitized solar cell including the photoelectric conversion element have at least the substrate 1 composed of an aluminium layer and the insulating layer 16 having a porous structure that is formed by anodizing at least one surface of the aluminium layer, and the insulating layer 16 has strain in a compression direction at 23°C.

The photoelectric conversion element 100 of the present invention has a laminated structure in which the first electrode 2, the photosensitive body 3 having a porous semiconductor fine particle layer onto which a dye has been adsorbed, the charge transfer body 4, and the counter electrode 9 are disposed on the insulating layer 16 of the substrate 1. Furthermore, it is preferable that the photoelectric conversion element 100 of the present invention has a structure in which the first electrode 2, the photosensitive body 3 having a porous semiconductor fine particle layer onto which a dye has been adsorbed, the charge transfer body 4, and the counter electrode 9 are laminated on the insulating layer 16 in this order from the side of the insulating layer. The dye-sensitized solar cell of the present invention includes the photoelectric conversion element 100 of the present invention.

The method for manufacturing a photoelectric conversion element of the present invention includes forming an insulating layer having strain in a compression direction at 23°C by anodizing at least one surface of an aluminium material, and forming a laminated structure including a first electrode, a photosensitive body having a porous semiconductor fine particle layer onto which a dye has been adsorbed, a charge transfer body, and a counter electrode, on the insulating layer.

At this time, the light receiving electrode 7 (a laminate composed of the substrate, the first electrode, and the photosensitive body) is preferably manufactured in the form of a dye-adsorbed electrode by using a dye and preferably by using a dye solution containing a metal complex dye.

Such a dye solution is obtained by dissolving a dye in a solvent. If necessary, the dye solution may contain a coadsorbent or other components.

As the coadsorbent, a coadsorbent having one or more acidic groups (preferably a carboxyl group or a group of a salt thereof) is preferable, and examples thereof include fatty acids and compounds having a steroid skeleton. The fatty acid may be saturated fatty acids or unsaturated fatty acids, and examples thereof include butanoic acid, hexanoic acid, octanoic acid, decanoic acid, hexadecanoic acid, dodecanoic acid, palmitic acid, stearic acid, oleic acid, linoleic acid, linolenic acid, and the like.

Examples of the compounds having a steroid skeleton include cholic acid, glycocholic acid, chenodeoxycholic acid, hyocholic acid, deoxycholic acid, lithocholic acid, ursodeoxycholic acid, and the like. Among these, cholic acid, deoxycholic acid, and chenodeoxycholic acid are preferable, and chenodeoxycholic acid is more preferable.

Examples of the solvent used in the dye solution include the solvents described in JP2001-291534A, but the solvent is not particularly limited. In the present invention, an organic solvent is preferable, and alcohols, amides, nitriles, alcohols, hydrocarbons, and a mixed solvent consisting of two or more kinds of these are more preferable. The mixed solvent is preferably a mixed solvent obtained by mixing alcohols with a solvent selected from among amides, nitriles, alcohols, or hydrocarbons, more preferably a mixed solvent consisting of alcohols and amides or consisting of alcohols and hydrocarbons, and particularly preferably a mixed solvent consisting of alcohols and amides. Specifically, methanol, ethanol, propanol, butanol, dimethylformamide, and dimethylacetamide are preferable.

The dye solution preferably contains the coadsorbent. As the coadsorbent, compounds having a steroid skeleton are preferable.

Herein, it is preferable to adjust the concentration of the metal complex dye or the coadsorbent in the dye solution used in the present invention, such that the solution can be used as is for manufacturing the photoelectric conversion element or the dye-sensitized solar cell. In the present invention, the dye solution preferably contains the dye in an amount of 0.001% by mass to 0.1% by mass.

It is particularly preferable to adjust the water content in the dye solution. Therefore, in the present invention, it is important to adjust the water content to be 0% by mass to 0.1% by mass.

Likewise, in order to make the effects of the present invention excellently exerted, it is important to adjust the water content of the electrolytic solution in the photoelectric conversion element or the dye-sensitized solar cell. Therefore, it is preferable to adjust the water content of the electrolytic solution to be 0% by mass to 0.1% by mass. It is particularly preferable to use the dye solution to prepare the electrolytic solution.

### Examples

Hereinafter, the present invention will be more specifically described based on examples, but the present invention is not limited thereto.

### Example 1

A dye-sensitized solar cell including a photoelectric conversion element was prepared according to the following procedure, and the output [Pmax (mW)] of the dye-sensitized solar cell was evaluated.

### [Preparation of substrate]

### (1) Preparation of substrate

Two kinds of metal base materials 15 described below were subjected to constant-voltage electrolysis at a certain voltage under the conditions (concentration of electrolytic solution and temperature) shown in the following Table 1. In this way, anodization processing was performed on both surfaces of the metal base materials, and an anodic oxide film as the insulating layer 16 was formed. Thereafter, the metal base materials were subjected to annealing processing under the annealing conditions (temperature and time) shown in the following Table 1. The annealing processing was performed under the air by using an infrared lamp, and the metal base materials were kept heated for a certain period of time by increasing the temperature at a rate of 1°C/sec. By performing the annealing processing in this way on the anodic oxide film, the substrates 1 of the substrate Nos. 101 to 113 of the present invention and the comparative substrates of substrate Nos. c01 to c04 shown in the following Table 1 were prepared.

### Metal base material [A]: single material

High-purity Al having thickness of 40 µm (Al purity: 4N)

### Metal base material [B]: cladding material

High-purity Al (Al purity: 4N)/ferrite-based stainless steel (material: SUS430)/high-purity Al (Al purity: 4N) = 30 µm thick/60 µm thick/30 µm thick

For each of the substrates 1 prepared as above, the amount of strain and the Young's modulus of the anodic oxide film forming the insulating layer 16 were measured at 23°C, thereby calculating the internal stress. Furthermore, a dielectric breakdown test was performed to evaluate a dielectric breakdown voltage.

### (Amount of strain)

The amount of strain was determined as below. First, each of the substrates 1 prepared as above was left at 23°C for a sufficient period of time, and then the length of the anodic oxide film forming the insulating layer 16 was measured. Thereafter, the metal base material 15 was dissolved and removed, the obtained anodic oxide film was left at 23°C for a sufficient period of time, and then the length of the anodic oxide film was measured. Subsequently, a difference in the length between the anodic oxide film before the removal of the metal base material 15 and the anodic oxide film after the removal of the metal base material 15 was divided by the length of the anodic oxide film before the removal of the metal base material 15 so as to determine the amount of strain.

In Table 1, a case, in which the length of the anodic oxide film after the removal of the metal base material 15 is greater than the length of the anodic oxide film before the removal of the metal base material 15, is described as "compressive", and a case, in which the length of the anodic oxide film after the removal of the metal base material 15 is smaller than the length of the anodic oxide film before the removal of the metal base material 15, is described as "tensile".

### (Young's modulus)

The Young's modulus was measured by using PICODENTOR (registered trademark) HM500H manufactured by Fischer Instruments K.K. by means of pushing an indenter into the anodic oxide film to a depth of 0.5 µm from the surface thereof.

### (Internal stress)

By using the amount of strain and the Young's modulus obtained as above, the internal stress (= amount of strain × Young's modulus) was determined.

### (Dielectric breakdown voltage)

In order to evaluate the insulating properties of the substrate l including roll-to-roll handling resistance thereof, each of the substrates having undergone annealing was present along a jig having a radius of curvature of 80 mm such that a surface subjected to a dielectric breakdown test became a convex surface. Thereafter, bending strain was applied thereto 10 times in each of two directions orthogonal to each other, and then a dielectric breakdown test was performed for evaluation.

After the aforementioned bending test was performed, a test piece was cut out of each of the substrates 1 in a size of 5 cm × 5 cm. On the insulating layer of each of the test pieces, a gold upper electrode having a diameter of 3 cm was formed.

After the gold upper electrode was formed on each of the test pieces, voltage was applied between the gold upper electrode and the aluminium substrate, and the applied voltage was slowly increased by 10 V. The voltage at which dielectric breakdown occurred was regarded as being a dielectric breakdown voltage.

Herein, for the substrate 1 in which the dielectric breakdown did not occur even when the applied voltage reached 1,000 V, "equal to or higher than 1,000 V" was marked in the column of dielectric breakdown voltage.

The obtained results are summarized in Table 1.

When the dielectric breakdown test was performed after the bending test, all of the substrates of the present invention exhibited excellent insulating properties, while all of the comparative substrates lost insulating properties. Presumably, this is because while cracks did not occur in the substrates of the present invention even after the bending test due to the compressive stress acting on the substrates, the comparative substrates cracked due to the bending test. Because the substrate of the present invention has the compressive stress, cracks do not easily occur even when the substrate is bent, and the substrate of the present invention becomes a flexible substrate and can be handled by a roll-to-roll method.

**[Table 1]**

| Substrate No. | Metal base material | Anodization condition | | | | Annealing condition | | Insulating layer Amount of strain at room temperature | | Young's modulus (GPa) | Internal stress (MPa) | Voltage at which insulating layer ruptures | Note |
|---|---|---|---|---|---|---|---|---|---|---|---|---|---|
| | | Electrolytic solution | Solution temperature (°C) | Voltage (V) | Film thickness (µm) | Temperature (°C) | Time (min) | | | | | | |
| 101 | [A] | 0.5 M oxalic acid | 16 | 40 | 10 | 100 | 10 | 0.046% | Compressive | 109 | 50 | 940 | Present invention |
| 102 | [A] | 0.5 M oxalic acid | 16 | 40 | 10 | 200 | 10 | 0.105% | Compressive | 112 | 118 | 960 | Present invention |
| 103 | [A] | 0.5 M oxalic acid | 16 | 40 | 10 | 300 | 10 | 0.146% | Compressive | 110 | 161 | 890 | Present invention |
| 104 | [A] | 0.5 M oxalic acid | 16 | 40 | 10 | 400 | 10 | 0.225% | Compressive | 115 | 259 | Equal to or greater than 1000 | Present invention |
| 105 | [A] | 0.5 M oxalic acid | 55 | 40 | 10 | - | - | 0.007% | Compressive | 112 | 8 | 950 | Present invention |
| 106 | [A] | 1M sulfuric acid | 35 | 15 | 10 | 400 | 10 | 0.232% | Compressive | 79 | 183 | 980 | Present invention |
| 107 | [A] | 1M phosphoric acid | 5 | 100 | 10 | 400 | 10 | 0.221% | Compressive | 123 | 272 | 930 | Present invention |
| 108 | [A] | 1M malonic acid | 80 | 80 | 10 | - | - | 0.072% | Compressive | 78 | 56 | 880 | Present invention |
| 109 | [A] | 1M malonic acid | 80 | 80 | 10 | 400 | 10 | 0.245% | Compressive | 79 | 194 | 990 | Present invention |
| 110 | [B] | 0.5 M oxalic acid | 16 | 40 | 10 | 100 | 10 | 0.032% | Compressive | 113 | 36 | 980 | Present invention |
| 111 | [B] | 0.5 M oxalic acid | 16 | 40 | 10 | 200 | 10 | 0.074% | Compressive | 110 | 81 | 860 | Present invention |
| 112 | [B] | 0.5 M oxalic acid | 16 | 40 | 10 | 300 | 10 | 0.103% | Compressive | 112 | 115 | 950 | Present invention |
| 113 | [B] | 0.5 M oxalic acid | 16 | 40 | 10 | 400 | 10 | 0.142% | Compressive | 111 | 158 | Equal to or greater than 1000 | Present invention |
| c01 | [A] | 0.5 M oxalic acid | 16 | 40 | 10 | - | - | 0.014% | Tensile | 112 | 16 | 20 | Comparative example |
| c02 | [A] | 1M sulfuric acid | 35 | 15 | 10 | - | - | 0.008% | Tensile | 70 | 6 | 10 | Comparative example |
| c03 | [A] | 1M phosphoric acid | 5 | 100 | 10 | - | - | 0.022% | Tensile | 121 | 27 | Equal to or less than 10 | Comparative example |
| c04 | [B] | 0.5 M oxalic acid | 16 | 40 | 10 | - | - | 0.007% | Tensile | 112 | 8 | 10 | Comparative example |

### [Preparation of photoelectric conversion element]

A photoelectric conversion element was prepared according to the following procedure.

### (Preparation of paste)

(Paste A) Spherical TiO₂ particles (anatase; mean particle size: 25 nm; hereinafter, referred to as "spherical TiO₂ particles A") were added to a nitric acid solution, and the solution was stirred, thereby preparing titania slurry. Then a cellulose-based binder was added as a thickener to the titania slurry, and the resultant was kneaded, thereby preparing a paste A.

(Paste 1) The spherical TiO₂ particles A and spherical TiO₂ particles (anatase; mean particle size: 200 nm; hereinafter, referred to as "spherical TiO₂ particles B) were added to a nitric acid solution, and the solution was stirred, thereby preparing titania slurry. Then a cellulose-based binder was added as a thickener to the titania slurry, and the resultant was kneaded, thereby preparing a paste 1 (mass of TiO₂ particles A:mass of TiO₂ particles B = 30:70).

(Paste 2) The paste A was mixed with rod-like TiO₂ particles (anatase; diameter; 100 nm; aspect ratio: 5; hereinafter, referred to as "rod-like TiO₂ particles C), thereby preparing a paste 2 (mass of rod-like TiO₂ particles:mass of paste A = 30:70).

### (Preparation of semiconductor electrode)

In order to evaluate the substrates of the present invention of substrate Nos. 101 to 113 and the comparative substrates of substrate Nos. c01 to c04 prepared by the aforementioned method and to also evaluate the roll-to-roll handling resistance thereof, a titanium electrode as the first electrode was formed on the insulating layer of each of the substrates having undergone the aforementioned bending test. Thereafter, on the titanium electrode, the paste 1 was printed by means of screen printing and then dried. Subsequently, the paste 1 was calcined under the air at 450°C. Furthermore, by using the paste 2, the screen printing and the calcining were repeated. In this way, a semiconductor electrode (area of light receiving surface; 10 mm × 10 mm, layer thickness; 10 µm, thickness of semiconductor layer; 6 µm, thickness of light scattering layer; 4 µm, content of rod-like TiO₂ particles contained in light scattering layer; 30% by mass) was formed on the first electrode, thereby preparing a photoelectrode not containing a dye.

By using these semiconductor electrodes, cells were prepared according to the procedure which will be described later.

### (Preparation of comparative semiconductor electrode)

Instead of the metal base materials [A] and [B] and the titanium electrode, polyethylene naphthalate (PEN) onto which ITO was deposited by sputtering was used. On the PEN, the paste 1 was printed by means of screen printing and then dried. Thereafter, the paste was calcined under the air at 150°C. Herein, because the paste calcined at a temperature higher than 150°C resulted in deformation of the substrate, the paste cannot be used for preparing a cell. Furthermore, by using the paste 2, the screen printing and the calcining were repeated. In this way, a semiconductor electrode (area of light receiving surface; 10 mm × 10 mm, layer thickness; 10 µm, thickness of semiconductor layer; 6 µm, thickness of light scattering layer; 4 µm, amount of rod-like TiO₂ particles contained in light scattering layer; 30% by mass) was formed on the first electrode (ITO film), thereby preparing a photoelectrode not containing a dye.

By using these semiconductor electrodes, cells (comparative cells R) were prepared according to the following procedure.

### (Adsorption of dye)

Thereafter, the following dye (R-1) was caused to be adsorbed onto the semiconductor electrode (precursor of a dye-adsorbed electrode). First, in a mixture (solvent) which was dehydrated over magnesium ethoxide and contained anhydrous butanol and dimethylformamide at a ratio of 1:1 (volume ratio), the following dye (R-1) was dissolved such that the concentration thereof became 3 × 10⁻⁴ mol/L. Furthermore, as a coadsorbent, an equimolar mixture of chenodeoxycholic acid and cholic acid was added to the solution, in an amount of 20 mol with respect to 1 mol of the following dye (R-1), thereby preparing dye solutions. Thereafter, the semiconductor electrode was dipped in each of the dye solutions for 10 hours at 40°C, pulled up, and then dried at 50°C. In this way, photoelectrodes 40 were completed in which the dye was adsorbed onto the semiconductor electrode in an amount of about 2 × 10⁻⁷ mol/cm².

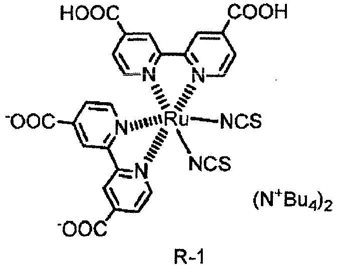

### (Assembling photoelectric conversion element)

Subsequently, as a counter electrode, polyethylene naphthalate (PEN) was used which had the same shape and size as the aforementioned photoelectrode and was treated with chloroplatinic acid, onto which ITO was deposited by sputtering. Furthermore, as an electrolytic solution, an iodine-based redox propionitrile solution containing 0.1 M iodine, 0.05 M lithium iodide, and 0.25 M 4-t-butylpyridine was prepared. In addition, a spacer S (trade name: "Surlyn") manufactured by DuPont having a shape matching the size of the semiconductor electrode was prepared. Moreover, a photoelectrode 40 and a counter electrode were caused to face each other across the spacer S and subjected to thermocompression, and the inside thereof was filled with the aforementioned electrolyte, thereby completing photoelectric conversion elements (cell Nos. 101 to 113 and c01 to c04). The performance of the dye-sensitized solar cells including these photoelectric conversion elements was evaluated in the following manner.

### (Test 1 for evaluation)

By performing a test for cell characteristics, a short-circuit current density (Jsc, unit: mA/cm²), an open-circuit voltage (Voc, unit: v), and a fill factor (FF) of the aforementioned dye-sensitized solar cells were calculated, and the cell output was divided by incident energy, thereby measuring the photoelectric conversion efficiency [η(%)]. In the test for cell characteristics, a solar simulator (PEC-L12 manufactured by Peccell Technologies, Inc.) was used. The cell characteristics were evaluated by using an I-V characteristic analyzer (trade name: PECK2400-N) manufactured by Peccell Technologies, Inc. For the evaluation, 5 cells were prepared under the same condition, and the evaluation result of photoelectric conversion efficiency was indicated as the average of the results obtained from the test for cell characteristics performed using the cells. Furthermore, the variation was evaluated by standard deviation. The obtained results were evaluated based on the following evaluation criteria.

Evaluation criteria for initial conversion efficiency
A: The photoelectric conversion efficiency is at least 1.3-fold higher than the photoelectric conversion efficiency of the comparative cell R.
B: The photoelectric conversion efficiency is higher than the photoelectric conversion efficiency of the comparative cell R, by at least 1.1-fold but less than 1.3-fold.
C: The photoelectric conversion efficiency is higher than the photoelectric conversion efficiency of the comparative cell R, by less than 1.1-fold.

Herein, the following Table 2 shows the initial photoelectric conversion efficiency as initial performance.

Evaluation criteria for variation in initial efficiency
A: less than 0.07
B: equal to or greater than 0.07 and less than 0.15
C: equal to or greater than 0.15

Herein, the following Table 2 shows the variation in the initial efficiency as variation in performance.

### (Test 2 for evaluation)

By using a resin XNR-5516 manufactured by Nagase ChemteX Corporation, the outer periphery and the electrolytic solution inlet of the prepared dye-sensitized solar cell including the photoelectric conversion element were sealed, and the resin was cured. The dye-sensitized solar cell was left for 200 hours in an environment of 65°C, the photoelectric conversion efficiency thereof was measured before and after the cell was left in the aforementioned environment, and a ratio thereof was taken as a deterioration rate. For the evaluation, 5 cells were prepared under the same condition, and the evaluation result of deterioration rate was indicated as the average of the results obtained from the measurement performed using the cells. Furthermore, the variation was evaluated by standard deviation. The obtained results were evaluated based on the following evaluation criteria.

Evaluation criteria for deterioration rate
A: The deterioration rate is minus (improvement of photoelectric conversion efficiency).
B: The deterioration rate is 100% to 90%.
C: The deterioration rate is less than 90%.

Herein, Table 2 shows the deterioration rate as thermal durability.

Evaluation criteria for variation in deterioration rate
A: Less than 2%
B: Equal to or greater than 2% and less than 5%
C: Equal to or greater than 5%

Herein, Table 2 shows the variation in the deterioration rate as variation in the thermal durability.

The results obtained from the each of the dye-sensitized solar cells are summarized in the following Table 2.

**[Table 2]**

| Cell No. | Substrate No. | Characteristics of dye-sensitized solar cell | | | | Note |
|---|---|---|---|---|---|---|
| | | Initial performance | Variation in performance | Thermal durability | variation in thermal durability | |
| 101 | 101 | A | A | A | A | Present invention |
| 102 | 102 | A | A | A | A | Present invention |
| 103 | 103 | A | A | A | A | Present invention |
| 104 | 104 | A | A | A | A | Present invention |
| 105 | 105 | A | A | A | A | Present invention |
| 106 | 106 | A | A | A | A | Present invention |
| 107 | 107 | A | A | A | A | Present invention |
| 108 | 108 | A | A | A | A | Present invention |
| 109 | 109 | A | A | A | A | Present invention |
| 110 | 110 | A | A | A | A | Present invention |
| 111 | 111 | A | A | A | A | Present invention |
| 112 | 112 | A | A | A | A | Present invention |
| 113 | 113 | A | A | A | A | Present invention |
| c01 | c01 | C | C | B | C | Comparative example |
| c02 | c02 | C | C | B | C | Comparative example |
| c03 | c03 | C | C | B | C | Comparative example |
| c04 | c04 | C | C | B | C | Comparative example |

As is evident from Table 2, all of the dye-sensitized solar cells using the photoelectric conversion element of the present invention has excellent photoelectric conversion efficiency (initial photoelectric conversion efficiency) and a high degree of durability, and particularly, the variation in the photoelectric conversion efficiency and the durability of the dye-sensitized solar cells is small.

It is considered that this is because in a case of preparing a dye-sensitized solar cell on a substrate having undergone a bending test, the substrate of the present invention does not crack, but the comparative substrate cracks.

## Claims

1. A photoelectric conversion element, comprising:
a substrate including at least an aluminium layer and an insulating layer having a porous structure formed by anodizing at least one surface of the aluminium layer; and
a laminated structure disposed on the insulating layer;
wherein the laminated structure contains a first electrode, a photosensitive body having a porous semiconductor fine particle layer onto which a dye has been adsorbed, a charge transfer body, and a counter electrode,
wherein the insulating layer has strain in a compression direction at 23°C.

2. The photoelectric conversion element according to claim 1 that is a photoelectric conversion element obtained by laminating the first electrode, the photosensitive body having a porous semiconductor fine particle layer onto which a dye has been adsorbed, the charge transfer body, and the counter electrode on the insulating layer in this order from the side of the insulating layer.

3. The photoelectric conversion element according to claim 1 or 2,
wherein the porous semiconductor fine particle is titanium oxide, tin oxide, or zinc oxide.

4. The photoelectric conversion element according to any one of claims 1 to 3,
wherein the porous semiconductor fine particle is titanium oxide.

5. The photoelectric conversion element according to any one of claims 1 to 4,
wherein the dye is a metal complex dye.

6. The photoelectric conversion element according to claim 5,
wherein the metal complex dye is a metal complex dye containing a Ru atom or an Os atom.

7. The photoelectric conversion element according to any one of claims 1 to 6,
wherein the strain in the compression direction of the insulating layer is 0.005% to 0.25%.

8. The photoelectric conversion element according to any one of claims 1 to 7,
wherein at least one surface of the substrate including a metal, which has a linear thermal expansion coefficient smaller than that of aluminium and has rigidity and heat resistance higher than those of aluminium, is integrated with the aluminium material by pressure bonding, and the insulating layer is formed on at least one surface of the aluminium material.

9. The photoelectric conversion element according to claim 8,
wherein the metal constituting the substrate includes ferrite-based stainless steel.

10. A method for manufacturing a photoelectric conversion element, comprising:
forming an insulating layer having strain in a compression direction at 23°C by anodizing at least one surface of an aluminium material; and
forming a laminated structure including a first electrode, a photosensitive body having a porous semiconductor fine particle layer onto which a dye has been adsorbed, a charge transfer body, and a counter electrode on the insulating layer.

11. A dye-sensitized solar cell including the photoelectric conversion element according to any one of claims 1 to 9.
